# EUROPEAN PATENT APPLICATION

(11) **EP 4 684 994 A1**
(43) Date of publication of application: **28.01.2026**
(21) Application number: 25190681.4
(22) Date of filing: 21.07.2025
(51) Int. Cl.: B60K 6/26, B60K 6/44, B60K 6/445, B60K 6/52

(54) **DRIVE APPARATUS FOR VEHICLE**

(30) Priority: 26.07.2024 JP 2024121437; 25.10.2024 JP 2024188528
(71) Applicant: TOYOTA JIDOSHA KABUSHIKI KAISHA, Toyota-shi, Aichi-ken 471-8571 (JP)
(72) Inventor: IMAMURA, Tatsuya, Toyota-shi, 471-8571 (JP); YOSHINO, Hirotsugu, Toyota-shi, 471-8571 (JP); SUZUKI, Yosuke, Toyota-shi, 471-8571 (JP); KURIHARA, Daiki, Toyota-shi, 471-8571 (JP)
(74) Representative: D Young & Co LLP

(57) **Abstract**

A vehicle drive apparatus (10;110;210;310;410) includes an engine (18) and a first drive unit (16f;116f;216f;316f) that includes (i) a first electric motor (MG1), (ii) a second electric motor (MG2), (iii) a planetary gear device (24;124;224;324) having a first rotary element (RE1), a second rotary element (RE2) and a third rotary element (RE3) that are rotatable about a first axis (CS1), (iv) a first pair of gears (26) consisting of a counter drive gear (34) and a counter driven gear (36) meshing with each other, (v) a counter driven shaft (28) on which the counter driven gear (36) is disposed and (vi) a second pair of gears (30) consisting of a final drive gear (38) and a final driven gear (32r) meshing with each other. The counter drive gear (34), the planetary gear device (24;124;224;324) and the second electric motor (MG2) are disposed on the first axis (CS1), and are arranged in this order of description as viewed in a direction away from the engine (18). The first electric motor (MG1) is disposed on a second axis (CS2) that is parallel with the first axis (CS1).

## Description

### FIELD OF THE INVENTION

The present invention relates to a drive apparatus for a vehicle, wherein the drive apparatus is provided with an engine and a drive unit that includes two electric motors and a drive unit including a planetary gear device.

### BACKGROUND OF THE INVENTION

There is well known a drive apparatus for a vehicle, wherein the drive apparatus is provided with (a) an engine, (b) a first drive shaft for driving one of front and rear wheels of the vehicle, and (c) a first drive unit that includes (c-i) a first electric motor, (c-ii) a second electric motor and (c-iii) a planetary gear device which has a first rotary element, a second rotary element and a third rotary element. JP 2014-80135 A discloses a drive apparatus for a hybrid electric vehicle as an example such a drive apparatus. In the drive apparatus disclosed in this Japanese Patent Application Publication, an axial dimension of the first drive unit is reduced by arranging input and output shafts of the first electric motor substantially parallel with input and output shafts of the engine.

### SUMMARY OF THE INVENTION

In order to establish various drive modes, it might be possible to construct the drive apparatus such that the engine and the first electric motor are connected to the first rotary element of the planetary gear device, such that the second electric motor is connected to the second rotary element of the planetary gear device, and such that the first drive shaft is connected to the third rotary element of the planetary gear device. As the various drive modes, there are HEV (Hybrid Electric Vehicle) mode and BEV (Battery Electric Vehicle) mode, for example. In the HEV mode, the engine is operated and an electric power is transferred between the first electric motor and the second electric motor. In the BEV mode, the engine is stopped and a torque is generated in the first electric motor and the second electric motor. In the vehicle drive apparatus constructed in this way, too, it is desirable to reduce the axial dimension of the first drive unit, which is, for example, a length of the first drive unit in a direction of a first axis that is a center of rotation of the planetary gear device.

The present invention was made in view of the background art described above. It is therefore an object of the present invention to provide a drive apparatus for a vehicle, wherein the drive apparatus is capable of establishing various modes and includes a first drive unit that is made compact in an axial dimension.

The object indicated above is achieved according to the following aspects of the present invention.

According to a first aspect of the invention, there is provided a drive apparatus for a vehicle. The drive apparatus includes: an engine; a first drive shaft for driving one of front and rear wheels of the vehicle; and a first drive unit including: (i) a first electric motor; (ii) a second electric motor; (iii) a planetary gear device which has a first rotary element, a second rotary element and a third rotary element that are rotatable about a first axis; (iv) a first pair of gears which consists of a counter drive gear and a counter driven gear meshing with each other; (v) a counter driven shaft which is parallel with the first drive shaft and the first axis, and on which the counter driven gear is disposed unrotatably relative to the counter driven shaft; and (vi) a second pair of gears which consists of a final drive gear and a final driven gear meshing with each other, such that the final drive gear is arranged in parallel with the counter driven gear and is disposed on the counter driven shaft unrotatably relative to the counter driven shaft. The engine and the first electric motor are connected to the first rotary element. The second electric motor is connected to the second rotary element. The first drive shaft is connected to the third rotary element through the first pair of gears and the second pair of gears. The counter drive gear, the planetary gear device and the second electric motor are disposed on the first axis, and are arranged in this order of description as viewed in a direction away from the engine. The first electric motor is disposed on a second axis which is parallel with the first axis, and is connected to the first rotary element through a power transmission mechanism.

According to a second aspect of the invention, in the drive apparatus according to the first aspect of the invention, the planetary gear device is of double pinion type, and includes a sun gear, a carrier and a ring gear, wherein the first rotary element is one of the carrier and the sun gear, wherein the second rotary element is the other of the carrier and the sun gear, and wherein the third rotary element is the ring gear.

According to a third aspect of the invention, in the drive apparatus according to the second aspect of the invention, the first drive unit further includes a bearing supporting the counter drive gear, wherein the sun gear, the ring gear and the counter drive gear are helical gears having respective helix angles that are set such that a direction of a thrust force applied to the ring gear by a meshing reaction force and a direction of a thrust force applied to the counter drive gear by a meshing reaction force are opposite to each other.

According to a fourth aspect of the invention, in the drive apparatus according to the third aspect of the invention, the helix angle of the ring gear is set such that the thrust force applied to the ring gear by the meshing reaction force in a direction toward the counter drive gear.

According to a fifth aspect of the invention, in the drive apparatus according to the first aspect of the invention, the planetary gear device is of double pinion type, and includes a sun gear, a carrier and a ring gear, wherein the first rotary element is the ring gear, wherein the second rotary element is one of the sun gear and the carrier, and wherein the third rotary element is the other of the sun gear and the carrier.

According to a sixth aspect of the invention, in the drive apparatus according to the first aspect of the invention, the planetary gear device is of single pinion type, and includes a sun gear, a carrier and a ring gear, wherein the first rotary element is one of the ring gear and the sun gear, wherein the second rotary element is the other of the ring gear and the sun gear, and wherein the third rotary element is the carrier.

According to a seventh aspect of the invention, in the drive apparatus according to the first aspect of the invention, the planetary gear device is of single pinion type, and includes a sun gear, a carrier and a ring gear, wherein the first rotary element is the carrier, wherein the second rotary element is one of the sun gear and the ring gear, and wherein the third rotary element is the other of the sun gear and the ring gear.

According to an eighth aspect of the invention, in the drive apparatus according to the seventh aspect of the invention, the second rotary element is the sun gear, and the third rotary element is the ring gear, wherein the first drive unit further includes a bearing supporting the counter drive gear, and wherein the sun gear, the ring gear and the counter drive gear are helical gears having respective helix angles that are set such that a direction of a thrust force applied to the ring gear by a meshing reaction force and a direction of a thrust force applied to the counter drive gear by a meshing reaction force are opposite to each other.

According to a ninth aspect of the invention, in the drive apparatus according to the first aspect of the invention, the counter driven shaft is located on a lower side of the first axis in a vertical direction of the vehicle when the drive apparatus is installed in the vehicle.

According to a tenth aspect of the invention, in the drive apparatus according to the first aspect of the invention, the final drive gear is located between the counter driven gear and the second electric motor in a direction parallel with the counter driven shaft.

According to an eleventh aspect of the invention, in the drive apparatus according to the first aspect of the invention, the final driven gear is an input rotary member of a differential gear device to which the first drive shaft is connected, and is disposed on an axis of the first drive shaft.

According to a twelfth aspect of the invention, in the drive apparatus according to the first aspect of the invention, the first drive unit further includes a brake mechanism configured to stop rotation of the first rotary element by being placed in an engaged state.

According to a thirteenth aspect of the invention, in the drive apparatus according to any one of the first through twelfth aspects of the invention, there are further provided: a second drive shaft for driving the other of the front and rear wheels; and a second drive unit including a third electric motor connected to the second drive shaft.

In the drive apparatus according to the first aspect of the invention, the planetary gear device of the first drive unit is constructed, such that the engine and the first electric motor are connected to the first rotary element, such that the second electric motor is connected to the second rotary element, and such that the first drive shaft is connected to the third rotary element through the first pair of gears and the second pair of gears. Thus, various modes can be established as a drive mode of the vehicle. Further, the counter drive gear, the planetary gear device and the second electric motor are disposed on the first axis that is parallel to the counter driven shaft, and the first electric motor is disposed on the second axis which is parallel with the first axis and is connected to the first rotary element through the power transmission mechanism. Thus, it is possible to reduce an axial dimension of the first drive unit. Further, the counter drive gear is located closer to the engine than the planetary gear device. Thus, the axial dimension of the first drive unit can be further reduced than in an arrangement in which the counter drive gear is located closer to the second electric motor than the planetary gear device. Therefore, the axial dimension of the first drive unit can be made small in the drive apparatus in which the various modes can be established.

In the drive apparatus according to the second aspect of the invention, the planetary gear device is of double pinion type, wherein the first rotary element is one of the carrier and the sun gear, wherein the second rotary element is the other of the carrier and the sun gear, and wherein the third rotary element is the ring gear. Thus, it is possible to reduce the axial dimension of the first drive unit in a case where a mechanical point, at which a rotational speed of the second rotary element of the planetary gear device, i.e., a rotational speed of the second electric motor, is zero, is set by a speed reduction ratio. Further, it is possible to simplify a construction for connecting the first drive shaft to the third rotary element through the first pair of gears and the second pair of gears, and to reduce a size of the first drive unit.

In the drive apparatus according to the third aspect of the invention, the first drive unit further includes the bearing supporting the counter drive gear, and the sun gear, the ring gear and the counter drive gear are helical gears having respective helix angles that are set such that the direction of the thrust force applied to the ring gear by the meshing reaction force and the direction of the thrust force applied to the counter drive gear by the meshing reaction force are opposite to each other. Thus, at least a part of the thrust force applied to the counter drive gear is offset by the thrust force applied to the ring gear, whereby a load inputted to the bearing supporting the counter drive gear can be reduced so that it is possible to reduce a size of the bearing and to reduce a loss.

In the drive apparatus according to the fourth aspect of the invention, the helix angle of the ring gear is set such that the thrust force applied to the ring gear by the meshing reaction force in the direction toward the counter drive gear. Thus, the direction of the thrust force applied to the sun gear by the meshing reaction force is directed away from the bearing, so that it is possible to advantageously reduce the load inputted to the bearing supporting the counter drive gear.

In the drive apparatus according to the fifth aspect of the invention, the planetary gear device is of double pinion type, wherein the first rotary element is the ring gear, wherein the second rotary element is one of the sun gear and the carrier, and wherein the third rotary element is the other of the sun gear and the carrier. Thus, it is possible to reduce the axial dimension of the first drive unit in a case where the mechanical point, at which the rotational speed of the second rotary element of the planetary gear device, i.e., the rotational speed of the second electric motor, is zero, is set by a speed increase ratio.

In the drive apparatus according to the sixth aspect of the invention, the planetary gear device is of single pinion type, wherein the first rotary element is one of the ring gear and the sun gear, wherein the second rotary element is the other of the ring gear and the sun gear, and wherein the third rotary element is the carrier. Thus, it is possible to reduce the axial dimension of the first drive unit in a case where the mechanical point, at which the rotational speed of the second rotary element of the planetary gear device, i.e., the rotational speed of the second electric motor, is zero, is set by a speed reduction ratio.

In the drive apparatus according to the seventh aspect of the invention, wherein the planetary gear device is of single pinion type, wherein the first rotary element is the carrier, wherein the second rotary element is one of the sun gear and the ring gear, and wherein the third rotary element is the other of the sun gear and the ring gear. Thus, it is possible to reduce the axial dimension of the first drive unit in a case where the mechanical point, at which the rotational speed of the second rotary element of the planetary gear device, i.e., the rotational speed of the second electric motor, is zero, is set by a speed increase ratio. Further, it is possible to simplify a construction for connecting the first drive shaft to the third rotary element through the first pair of gears and the second pair of gears, and to reduce the size of the first drive unit.

In the drive apparatus according to the eighth aspect of the invention, the second rotary element is the sun gear, and the third rotary element is the ring gear. The first drive unit further includes the bearing supporting the counter drive gear. The sun gear, the ring gear and the counter drive gear are helical gears having respective helix angles that are set such that the direction of the thrust force applied to the ring gear by the meshing reaction force and the direction of the thrust force applied to the counter drive gear by the meshing reaction force are opposite to each other. Thus, at least a part of the thrust force applied to the counter drive gear is offset by the thrust force applied to the ring gear, whereby the load inputted to the bearing supporting the counter drive gear can be reduced so that it is possible to reduce a size of the bearing and to reduce a loss.

In the drive apparatus according to the ninth aspect of the invention, the counter driven shaft is located on the lower side of the first axis in the vertical direction of the vehicle when the drive apparatus is installed in the vehicle. Thus, the second axis can be located close to the first drive shaft, whereby a size of the drive apparatus can be reduced.

In the drive apparatus according to the tenth aspect of the invention, the final drive gear is located between the counter driven gear and the second electric motor in the direction parallel with the counter driven shaft. Thus, the counter drive gear is located closer to the engine than the planetary gear device, whereby the axial dimension of the first drive unit can be appropriately reduced.

In the drive apparatus according to the eleventh aspect of the invention, the final driven gear is the input rotary member of the differential gear device to which the first drive shaft is connected. Thus, the counter drive gear is located closer to the engine than the planetary gear device, whereby the axial dimension of the first drive unit can be appropriately reduced.

In the drive apparatus according to the twelfth aspect of the invention, the first drive unit further includes the brake mechanism configured to stop the rotation of the first rotary element by being placed in the engaged state. Thus, in the drive apparatus, it is possible to establish various modes including a mode in which a motor driving, i.e., BEV driving, which is performed by the second electric motor as a power source, with the engine being stopped.

In the drive apparatus according to the thirteenth aspect of the invention, the third electric motor is connected to the second drive shaft. Thus, in the drive apparatus, it is possible to establish various modes including a mode in which a so-called series driving is performed. When the vehicle is driven with the engine being operated, the series driving can be performed, for example, by causing the second drive shaft to be driven by operation of the third electric motor as a prime mover, which is made by an electric power generated by the first electric motor owing to a power of the engine.

### BRIEF DESCRIPTION OF THE DRAWINGS

FIG. 1 is a view schematically showing a construction of a vehicle provided with a vehicle drive apparatus (double pinion_U/D type) to which the present invention is applied;
FIG. 2 is a view showing a construction of the vehicle drive apparatus, by using a collinear diagram;
FIG. 3 is a collinear diagram for explaining BEV mode in which each of first and second electric motors is caused to generate a torque;
FIG. 4 is a collinear diagram for explaining BEV mode in which the second electric motor is caused to generate the torque, with a brake being in its engaged state;
FIG. 5 is a collinear diagram for explaining BEV mode in which a third electric motor is caused to generate the torque, with the brake being in the engaged state;
FIGS. 6A and 6B are collinear diagrams for explaining first HEV mode (series mode) in which an engine is driven and rotated, and an electric power is transferred between the first and third electric motors, wherein FIG. 6A shows a case in which the third electric motor is caused to generate the torque by the electric power generated by the first electric motor, and FIG. 6B shows a case in which an engine brake is generated by a power driving of the first electric motor that consumes the electric power generated by the third electric motor;
FIGS. 7A and 7B are collinear diagrams for explaining second HEV mode (input split mode) in which the engine is operated whereby the electric power is transferred between the second and third electric motors, wherein FIG. 7A shows a case in which the third electric motor is caused to generate the torque by the electric power generated by the second electric motor, and FIG. 7B shows a case in which the second electric motor is caused to generate the torque by the electric power generated by the third electric motor;
FIGS. 8A and 8B are collinear diagrams for explaining third HEV mode (output split mode) in which the engine is operated whereby the electric power is transferred between the first and second electric motors, wherein FIG. 8A shows a case in which the second electric motor is caused to generate the torque by the electric power generated by the first electric motor, and FIG. 8B shows a case in which the first electric motor is caused to generate the torque by the electric power generated by the second electric motor;
FIGS. 9A and 9B are views showing, by way of example, arrangements of various components of a front drive portion of the vehicle drive apparatus, wherein FIG. 9A shows the arrangement of the components of the front drive portion in the present embodiment, and FIG. 9B shows the arrangement of the components of the front drive portion in a comparative example;
FIG. 10 is a view schematically showing a construction of a vehicle provided with a vehicle drive apparatus (double pinion_U/D type) to which the present invention is applied, wherein the vehicle and the vehicle drive apparatus are other than those shown in FIG. 1;
FIG. 11 is a view showing a construction of the vehicle drive apparatus shown in FIG. 10, by using a collinear diagram;
FIG. 12 is a view schematically showing a construction of a vehicle provided with a vehicle drive apparatus (single pinion _U/D type) to which the present invention is applied, wherein the vehicle and the vehicle drive apparatus are other than those shown in FIG. 1;
FIG. 13 is a view showing a construction of the vehicle drive apparatus shown in FIG. 12, by using a collinear diagram;
FIG. 14 is a view schematically showing a construction of a vehicle provided with a vehicle drive apparatus (single pinion _U/D type) to which the present invention is applied, wherein the vehicle and the vehicle drive apparatus are other than those shown in FIG. 1;
FIG. 15 is a view showing a construction of the vehicle drive apparatus shown in FIG. 14, by using a collinear diagram;
FIG. 16 is a view showing a construction of a vehicle drive apparatus that is other than that shown in FIG. 1, by using a collinear diagram;
FIG. 17 is a collinear diagram for explaining BEV mode in which the second electric motor is caused to generate the torque, with a one-way clutch being in its engaged state;
FIG. 18 is a view for explaining setting of helix angles of a counter drive gear and a ring gear of a differential mechanism in the vehicle drive apparatus shown in FIG. 1;
FIG. 19 is a view for explaining setting of helix angles of a counter drive gear and a ring gear of a differential mechanism in the vehicle drive apparatus shown in FIG. 14; and
FIG. 20 is a view schematically showing a construction of a vehicle provided with a vehicle drive apparatus (doble pinion_U/D type) of a comparative example.

### DETAILED DESCRIPTION OF PREFERRED EMBODIMENTS

Hereinafter, embodiments of the invention will be described in detail with reference to the accompanying drawings.

### FIRST EMBODIMENT

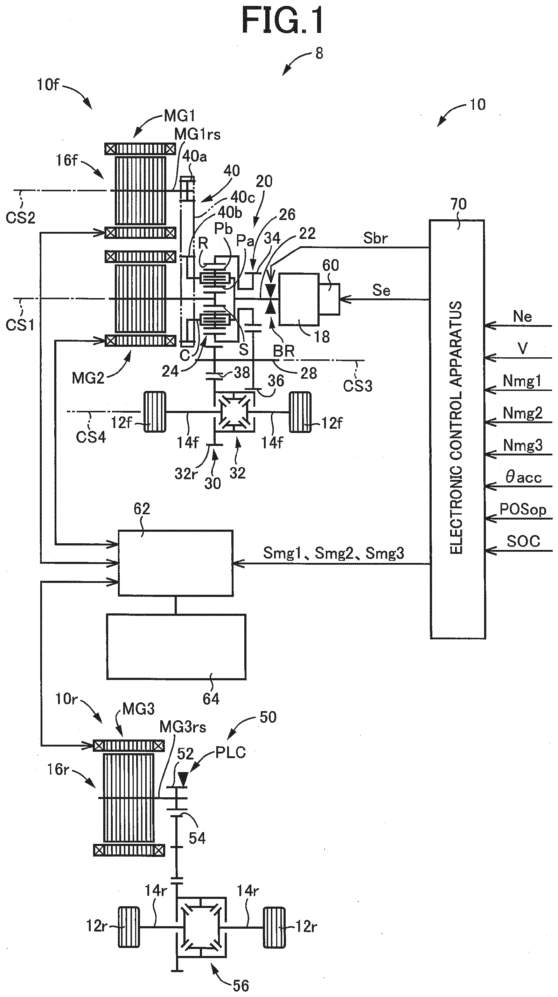

FIG. 1 is a view schematically showing a construction of a vehicle 8 provided with a vehicle drive apparatus 10 to which the present invention is applied. As shown in FIG. 1, the vehicle 8 includes drive wheels 12 and the vehicle drive apparatus 10 for driving the drive wheels 12. The drive wheels 12 consist of front right and left wheels 12f and rear right and left wheels 12r. The vehicle drive apparatus 10 includes a front drive portion 10f for driving the front wheels 12f and a rear drive portion 10r for driving the rear wheels 12r. The vehicle drive apparatus 10 includes drive shafts 14 for driving the drive wheels 12 and drive units 16 for driving the drive shafts 14. The drive shafts 14 include front right and left drive shafts 14f and rear right and left drive shafts 14r. The drive units 16 includes a front drive unit 16f and a rear drive unit 16r. It is noted that the above-described "right and left" refers to right and left relative to a forward direction of vehicle 8.

The front drive portion 10f includes an engine 18 and the above-described front drive shafts 14f and front drive unit 16f. The rear drive portion 10r includes the above-described rear drive shafts 14r and rear drive unit 16r. Each of the front drive shafts 14f corresponds to "first drive shaft" which is recited in the appended claims and which is provided to drive the front wheel 12f as one of the front and rear wheels 12f, 12r. Each of the rear drive shafts 14r corresponds to "second drive shaft" which is recited in the appended claims and which is provided to drive the rear wheel 12r as the other of the front and rear wheels 12f, 12r. The front drive unit 16f and the rear drive unit 16r correspond to "first drive unit" and "second drive unit", respectively, which are recited in the appended claims and which are provided to drive the front drive shafts 14f and the rear drive shafts 14r, respectively.

The front drive unit 16f includes a first electric motor MG1, a second electric motor MG2, a front power transmission mechanism 20, an input shaft 22 and a differential mechanism 24. The rear drive unit 16r includes a third electric motor MG3 and a rear power transmission mechanism 50.

The vehicle 8 is a hybrid electric vehicle (HEV) or a plug-in hybrid electric vehicle (PHEV), and is an all-wheel drive vehicle in which the front wheels 12f and the rear wheels 12r are can be driven independently from one another. All wheel drive (AWD) and four wheel drive (4WD) are synonymous with each other. The vehicle drive apparatus 10 is capable of performing front-wheel drive for transmitting a torque to only the front wheels 12f, and also rear-wheel drive for transmitting the torque to only the rear wheels 12r.

The engine 18 is a known internal combustion engine, for example. An engine torque Te, which is the torque of the engine 18, is controlled with an engine control device 60 being controlled by an electronic control apparatus 70. The engine control device 60 is provided in the front drive portion 10f, and includes a throttle actuator, a fuel injection device and a fuel ignition device.

Each of the first electric motor MG1, second electric motor MG2 and third electric motor MG3 is a so-called motor generator, i.e., a rotary electric machine having a function serving as a prime mover configured to generate a mechanical power from an electric power and also a function serving as an electric generator configured to generate the electric power from the mechanical power. The first, second and third electric motors MG1, MG2, MG3 are connected to a battery 64 provided in the vehicle drive apparatus 10, through an inverter 62 that is also provided in the vehicle drive apparatus 10. The torque of each of the first, second and third electric motors MG1, MG2, MG3 is controlled with the inverter 62 being controlled by the electronic control apparatus 70. The torque of the first electric motor MG1, the torque of the second electric motor MG2 and the torque of the third electric motor MG3 will be referred to as "first electric motor torque Tmg1", "second electric motor torque Tmg2" and "third electric motor torque Tmg3", respectively. The torque of each electric motor serves as a power driving torque when the electric motor functions as the prime mover, and serves as a regenerative torque when the electric motor functions as the electric generator. The battery 64 is an electric-power storage device configured to supply and receive the electric power to and from the first, second and third electric motors MG1, MG2, MG3. The first, second and third electric motors MG1, MG2, MG3 are controlled through the inverter 62 such that the electric power is supplied and received to and from all of them simultaneously. The term "simultaneously" means that the first, second and third electric motors MG1, MG2, MG3 are placed in power-driving or regeneration enabling states independently at the same time.

The front power transmission mechanism 20 is a first power transmission mechanism provided in a power transmission path between the differential mechanism 24 and the front drive shafts 14f (i.e., front wheels 12f). The front power transmission mechanism 20 includes a pair of counter gears 26, a counter driven shaft 28, a pair of final gears 30 and a front differential gear device 32.

The input shaft 22 is a rotary member connecting between the engine 18 and the differential mechanism 24. The pair of counter gears 26 consists of a counter drive gear 34 and a counter driven gear 36 meshing with each other, and corresponds to "first pair of gears" recited in the appended claims. The pair of final gears 30 consists of a final drive gear 38 and a final driven gear 32r meshing with each other, and corresponds to "second pair of gears" recited in the appended claims. The counter driven shaft 28 is a rotary shaft disposed in parallel with the front drive shafts 14f. The counter driven gear 36 and the final drive gear 38 are arranged in parallel with each other, and are disposed on the counter driven shaft 28 such that the counter driven gear 36 and the final drive gear 38 are unrotatable relative to the counter driven shaft 28. The final drive gear 38 has a smaller diameter than the counter driven gear 36. The final driven gear 32r is a ring gear of the front differential gear device 32, and corresponds to "input rotary member" recited in the appended claims. The front differential gear device 32, to which the front drive shafts 14f are connected, corresponds to "differential gear device" recited in the appended claims. The differential mechanism 24 and the front drive shafts 14f are connected through the front power transmission mechanism 20, for example.

The differential mechanism 24 corresponds to "planetary gear device of double pinion type" recited in the appended claims, and includes a sun gear S, pinion gears Pa, Pb, a carrier C and a ring gear R. The carrier C supports the pinion gears Pa, Pb such that each of the pinion gears Pa, Pb is rotatable about its axis and revolvable about a first axis CS1. The ring gear R meshes with the sun gear S through the pinion gears Pa, Pb. The pinion gears Pa, Pb consist of a plurality of pairs of pinion gears meshing with each other. The sun gear S is connected to the second electric motor MG2. The carrier C is connected to the engine 18 and the first electric motor MG1. The ring gear R is connected to the front drive shafts 14f through the pair of counter gears 26 and the pair of final gears 30, for example.

The engine 18, the second electric motor MG2, the differential mechanism 24 and the counter drive gear 34 are disposed on the first axis CS1 which is a rotation axis of the differential mechanism 24 and which is parallel with the counter driven shaft 28. The first electric motor MG1 is disposed on a second axis CS2 which is parallel with the first axis CS1. The counter driven gear 36 and the final drive gear 38 are disposed on a third axis CS3 which is a rotation axis of the counter driven shaft 28. The front differential gear device 32 and the front drive shafts 14f are disposed on a fourth axis CS4 which is a rotation axis of the front drive shafts 14f.

The engine 18 is connected to the carrier C of the differential mechanism 24 through the input shaft 22. The first electric motor MG1 is disposed on the second axis CS2 that is different from the first axis CS1. The front drive unit 16f further includes a power transmission mechanism 40 through which the first electric motor MG1 is connected to the carrier C. The first electric motor MG1 is connected to the carrier C through the power transmission mechanism 40. The first electric motor MG1 is located in a position such that a part or entirety of the first electric motor MG1 overlaps with a range from a position of the engine 18 to a position of the second electric motor MG2 on the first axis CS1 when viewed radially from the first axis CS1.

The power transmission mechanism 40 includes, for example, a first intermediate gear 40a fixedly disposed on a rotor shaft MG1rs of the first electric motor MG1 so as to be unrotatable relative to the rotor shaft MG1rs, a second intermediate gear 40b connected to the carrier C, and a belt 40c connecting between the first intermediate gear 40a and the second intermediate gear 40b. The first intermediate gear 40a has a smaller diameter than the second intermediate gear 40b, and the power transmission mechanism 40 functions as a reduction mechanism, for example. By arranging the first electric motor MG1 on the second axis CS2, a size of the front drive portion 10f in a direction of the first axis CS1 is made smaller than when the first electric motor MG1 is disposed on the first axis CS1. That is, an axial dimension of the front drive unit 16f is made smaller.

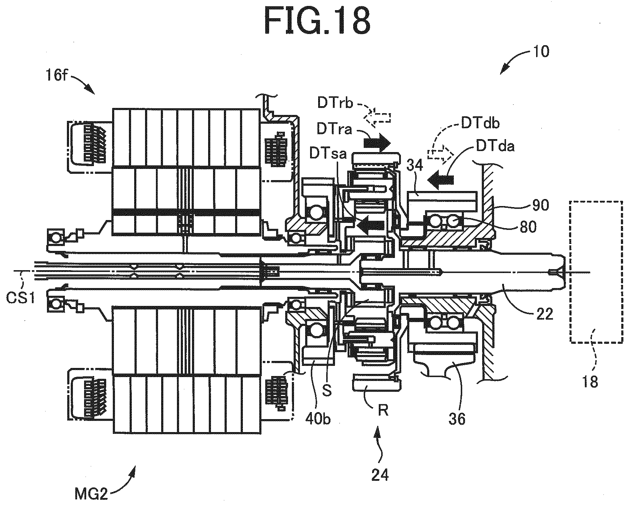

The front drive unit 16f further includes a brake BR. The brake BR is connected at one of its opposite end portions to the input shaft 22, and is connected at the other of the opposite end portions to a non-rotatable member (not shown). The non-rotatable member to which the brake BR is connected is, for example, a casing that houses the front drive unit 16f, for example (see front casing 90 in FIG. 18). The brake BR is an engagement device that is operated by an electrically or hydraulically operated actuator, for example, so as to connect between members at the opposite end portions. The brake BR functions as a brake mechanism configured to selectively stop rotation of the input shaft 22. The carrier C connected to the input shaft 22 is selectively made non-rotatable and rotatable by operation of the brake BR.

The rear power transmission mechanism 50 is a second power transmission mechanism provided in a power transmission path between the third electric motor MG3 and the rear drive shafts 14r, i.e., the rear wheels 12r. The rear power transmission mechanism 50 includes an output gear 52, a rear counter gear 54 and a rear differential gear device 56. The output gear 52 is fixedly disposed on the rotor shaft MG3rs of the third electric motor MG3 so as to be unrotatable relative to the rotor shaft MG3rs, and meshes with the rear counter gear 54. The output gear 52 and the rear differential gear device 56 are connected through the rear counter gear 54. The rear differential gear device 56 is a differential gear device to which the rear drive shafts 14r are connected. The third electric motor MG3 is connected to the rear drive shafts 14r through the rear power transmission mechanism 50, for example. The output gear 52 has a smaller diameter than the rear counter gear 54, and the output gear 52 and the rear counter gear 54 cooperate with each other to function as a reduction mechanism, for example.

The rear drive unit 16r further includes a parking mechanism PLC. The parking mechanism PLC has an end portion connected to a non-rotatable member (not shown). The parking mechanism PLC is operated by, for example, an electrically-operated actuator or a manually-operated mechanical actuator, and has another end portion that is to be engaged with or disengaged from the output gear 52 by operation of the actuator. The non-rotatable member to which the parking mechanism PLC is connected is, for example, a casing that houses the rear drive unit 16r, for example. The parking mechanism PLC is a known parking lock device that switches between a parking lock state in which the output gear 52 is mechanically fixed so as to be unrotatable and a non-parking lock state in which the output gear 52 is rotatable. The output gear 52 is a rotary member that is to be rotated together with the rear drive shafts 14r. The output gear 52 and rear drive shafts 14r are selectively rotatable and unrotatable by operation of the parking mechanism PLC.

The vehicle drive apparatus 10 further includes the electronic control apparatus 70 as a controller that is configured to control the vehicle drive apparatus 10, for example. The electronic control apparatus 70 includes a so-called microcomputer incorporating a CPU, a ROM, a RAM and an input-output interface. The CPU performs various control operations of the vehicle 8, by processing various input signals, according to control programs stored in the ROM, while utilizing a temporary data storage function of the RAM. For example, the electronic control apparatus 70 controls outputs of the engine 18, the first electric motor MG1, the second electric motor MG2 and the third electric motor MG3, and also controls switching of a drive mode of the vehicle 8, which will be described later. The electronic control apparatus 70 is sectioned into a portion for general control, a portion for controlling the engine 18 and a portion for controlling the electric motors MG1, MG2 and MG3, as needed.

The electronic control apparatus 70 receives various input signals based on values detected by respective sensors provided in the vehicle 8. Specifically, the electronic control apparatus 70 receives output signals indicative of an engine rotational speed Ne, a vehicle running speed V, a first-electric-motor rotational speed Nmg1, a second-electric-motor rotational speed Nmg2, a third-electric-motor rotational speed Nmg3, an accelerator opening degree θacc, a shift operation position POSop and a charged amount (state of charge) SOC, for example. The shift operation position POSop represents which one of lever positions such as "P", "R", "N", "D" a shift lever of a shift operation device is currently placed in. The charged amount SOC is a remaining charge of a battery 64, and is calculated based on a battery charge/discharge current and/or a battery voltage, for example.

From the electronic control apparatus 70, various kinds of command signals are outputted to various devices (such as the engine control device 60, inverter 62 and brake BR) provided in the vehicle 8. The various kinds of command signals are, for example, an engine control command signal Se, a first-electric-motor control command signal Smg1, a second-electric-motor control command signal Smg2, a third-electric-motor control command signal Smg3 and a brake control command signal Sbr. The engine control command signal Se is a command signal for an intake amount, an ignition timing and a fuel injection amount, for example, for controlling the engine 18. The first-electric-motor control command signal Smg1 is a command signal for a first electric motor current, for example, for controlling the first electric motor MG1. The second-electric-motor control command signal Smg2 is a command signal for a second electric motor current, for example, for controlling the second electric motor MG2. The third-electric-motor control command signal Smg3 is a command signal for a third electric motor current, for example, to control the third electric motor MG3. The brake control command signal Sbr is a request signal to control the brake BR to its ON or OFF state. It is noted that, in the engagement device, the ON state is synonymous with an engaged state (= connecting state) and the OFF state is synonymous with a released state (= disconnecting state).

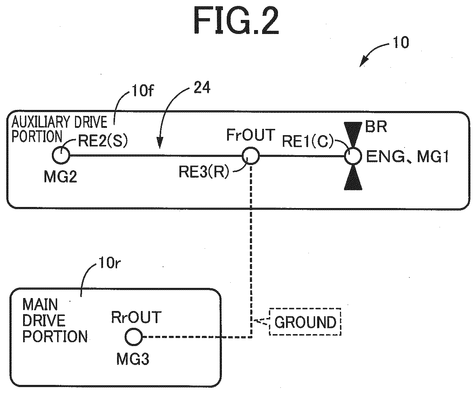

FIG. 2 is a view showing a construction of the vehicle drive apparatus 10, by using a collinear diagram. The rear drive portion 10r is a main drive portion to be used for driving in preference to the front drive portion 10f, for example. Thus, the front drive portion 10f is to be used as an auxiliary drive portion. In FIG. 2, "FrOUT" represents the front wheels 12f, and "RrOUT" represents the rear wheels 12r.

The differential mechanism 24 of the front drive portion 10f includes three rotary elements consisting of a first rotary element RE1, a second rotary element RE2 and a third rotary element RE3. Each of the rotary elements RE1-RE3 of the differential mechanism 24 is connected to an actuator. The collinear diagram of FIG. 2 shows the three rotary elements of the differential mechanism 24 arranged in a straight line. Expressing using the collinear diagram, the first rotary element RE1 is the carrier C. The first rotary element RE1 is connected to the engine 18 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 14f, i.e., the front wheels 12f, through the pair of counter gears 26 and the pair of final gears 30, for example. The brake BR corresponds to "brake mechanism" recited in the appended claims, and is configured to stop rotation of the first rotary element RE1 by being placed in an engaged state.

The third electric motor MG3 of the rear drive portion 10r is connected to rear wheels 12r, and can therefore be considered to be connected to the front wheels 12f through a ground (see dashed line in FIG. 2). It is possible to drive the vehicle 8 with the third electric motor MG3 being considered to be connected to the front wheels 12f, since the first, second and third electric motors MG1, MG2, MG3 are controlled such that the electric power is transferred among the first, second and third electric motors MG1, MG2, MG3 simultaneously.

The electronic control apparatus 70 is configured to control the engine 18 and the first through third electric motors MG1, MG2, MG3, and to place the drive mode of the vehicle 8 into a selected one of a plurality of modes.

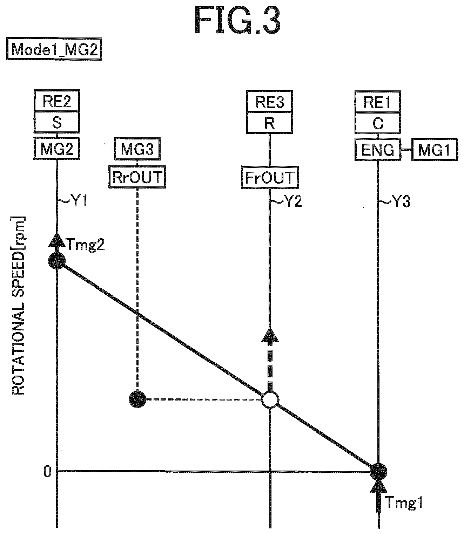

The plurality of modes into which the drive mode of the vehicle 8 can be placed, will be described with reference to FIGS. 3-8. Each of FIGS. 3-8 shows relative rotational speeds of the rotary elements RE1-RE3 of the differential mechanism 24 in the collinear diagram of FIG. 2. In collinear diagram of each of FIGS. 3-8, vertical lines Y1-Y3 are arranged in this order as seen from a left side in each of FIGS. 3-8. The vertical line Y1 represents the rotational speed of the sun gear S as the second rotary element RE2 to which the second electric motor MG2 is connected. The vertical line Y2 represents the rotational speed of the ring gear R as the third rotary element RE3 to which the front wheels 12f (see "FrOUT" in each of FIGS. 3-8) are connected. The vertical line Y3 represents the rotational speed of the carrier C as the first rotary element RE1 to which the engine 18 (see "ENG" in each of FIGS. 3-8) and the first electric motor MG1 are connected. Each of FIGS. 3-8 also shows that the third electric motor MG3 connected to the rear wheels 12r (see "RrOUT" in each of FIGS. 3-8) is connected to the front wheels 12f through the ground. Further, each arrow shows the magnitude and direction of the torque converted onto an axis of a corresponding one of the rotary element RE1-RE3, and each solid arrow shows the torque outputted by the corresponding actuator while dashed arrow shows the torque transmitted mechanically.

FIG. 3 is a collinear diagram for explaining Mode1_MG2, i.e., BEV mode as one of kinds of the Mode1 enabling the BEV driving, in which each of the first and second electric motors MG1, MG2 is caused to generate the torque. The Mode1_MG2 is one of the plurality of modes into which the drive mode of the vehicle 8 can be placed. In the Mode1_MG2, the BEV driving is performed, with each of the first and second electric motors MG1, MG2 being caused to generate the torque, and with the engine 18 being stopped. In the Mode1_MG2, each of the first and second electric motors MG1, MG2 supplies and receives the electric power to and from the battery 64, generating the torque, such that a moment around the third rotary element RE3 becomes zero thereby enabling the BEV driving. In this instance, the first electric motor torque Tmg1 is controlled such that drag of engine 18 does not occur, namely, such that the rotational speed of the first rotary element RE1 becomes zero. In the Mode1_MG2, the differential mechanism 24 is in a differential state, and the torque is generated from each of the first and second electric motors MG1, MG2, whereby the torque is mechanically transmitted to the third rotary element RE3 as an output element. It is noted that, in the Mode1_MG2, it is also possible to increase the drive torque by causing the third electric motor MG3 to generate the torque.

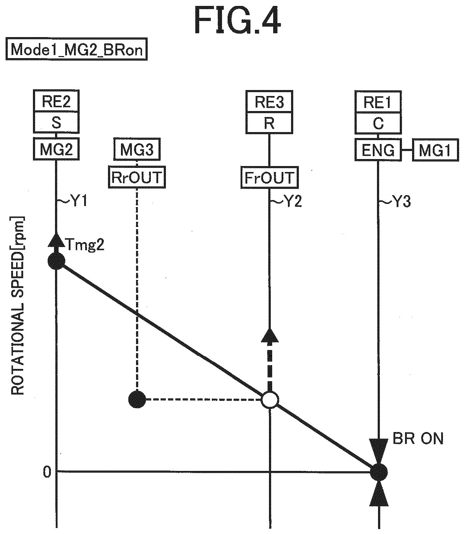

FIG. 4 is a collinear diagram for explaining Mode1_MG2_BRon, i.e., BEV mode as another one of kinds of the Mode1 enabling the BEV driving, in which the second electric motor MG2 is caused to generate the torque, with the brake BR being in the engaged state. The Model_MG2_BRon is one of the plurality of modes into which the drive mode of the vehicle 8 can be placed. In the Mode1_MG2 _BRon, the BEV driving is performed, with the second electric motor MG2 being caused to generate the torque, with the brake BR being in the engaged state, and with the engine 18 being stopped. In the Mode1_MG2 _BRon, the brake BR is placed in the engaged state whereby the rotational speed of the first rotary element RE1 is fixed to zero, so that the BEV driving in either forward or reverse direction is enabled by the second electric motor MG2 with the electric power supplied from the battery 64 without the first electric motor MG1 being caused to generate the torque. In this instance, the BEV driving is enabled with a maximum torque of the second electric motor MG2. In the Mode1_MG2_BRon, the differential mechanism 24 is in the differential state, and the torque is generated from the second electric motor MG2, whereby the torque is mechanically transmitted to the third rotary element RE3 as the output element. It is noted that, in the Mode1_MG2_BRon, it is also possible to increase the drive torque by causing the third electric motor MG3 to generate the torque.

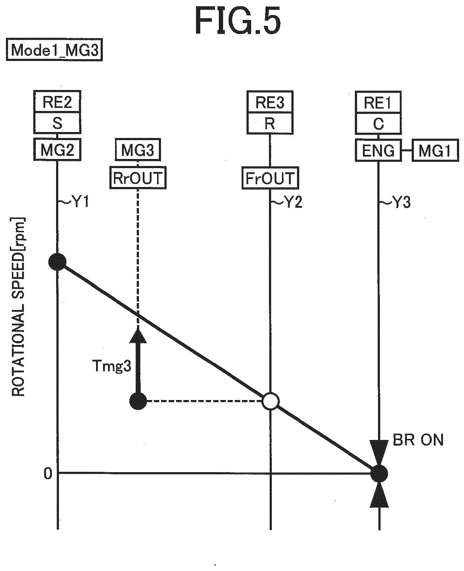

FIG. 5 is a collinear diagram for explaining Mode1_MG3, i.e., BEV mode as still another one of kinds of the Mode1 enabling the BEV driving, in which the third electric motor MG3 is caused to generate the torque, with the brake BR being in the engaged state. The Mode1_MG3 is one of the plurality of modes into which the drive mode of the vehicle 8 can be placed. In the Mode1_MG3, the BEV driving is performed, with the third electric motor MG3 being caused to generate the torque, with the brake BR being in the engaged state, and with the engine 18 being stopped. In the Mode1_MG3, the brake BR is placed in the engaged state whereby the rotational speed of the first rotary element RE1 is fixed to zero, so that the BEV driving in either forward or reverse direction is enabled by the third electric motor MG3 with the electric power supplied from the battery 64 without the engine 18 and the first electric motor MG1 being dragged.

It is noted that, in the Mode1_MG3, it is also possible to increase the drive torque by causing the second electric motor MG2 to generate the torque. Further, in the Mode1_MG3, the BEV driving can be performed also by causing the third electric motor MG3 to generate the torque, even without the brake BR being placed in the engaged state. That is, the Mode1_MG3 may be also a mode in which the BEV driving is performed with the third electric motor MG3 being caused to generate the torque and with the engine 18 being stopped.

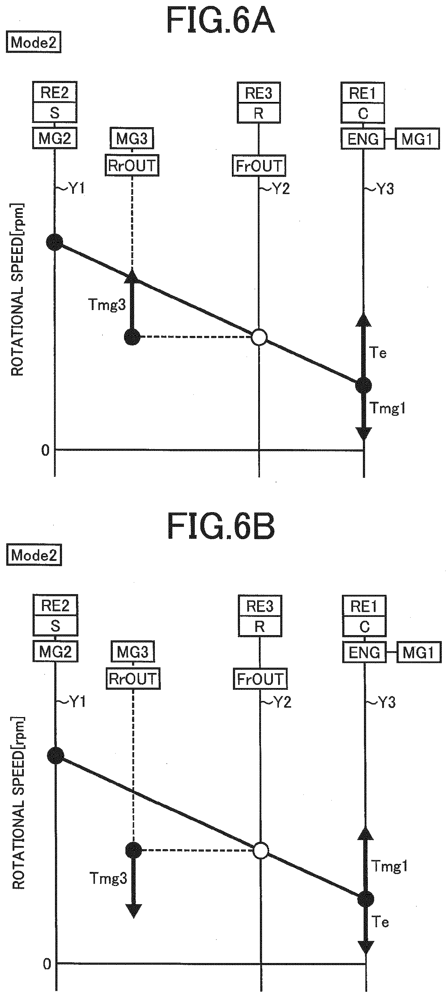

FIGS. 6A and 6B are collinear diagrams for explaining first HEV mode, i.e., Mode2 in which the engine 18 is driven and rotated , and the electric power is transferred between the first and third electric motors MG1, MG2, wherein FIG. 6A shows a case in which the third electric motor MG3 is caused to generate the torque by the electric power generated by the first electric motor MG1, and FIG. 6B shows a case in which an engine brake is generated by a power driving of the first electric motor MG1 that consumes the electric power generated by the third electric motor MG3. The Mode2 is one of the plurality of modes into which the drive mode of the vehicle 8 can be placed. The Mode2 is a mode enabling a hybrid driving, i.e., HEV driving, and is a series mode enabling a series driving with the engine 18 as the power source.

In the case shown in FIG. 6A, the Mode2 includes a mode in which the first electric motor MG1 is operated as the electric generator by operation of the engine 18, and the third electric motor MG3 is operated as the prime mover by the electric power generated by the first electric motor MG1. The Mode2 is a mode which can realize an electric-continuously-variable transmission function that performs a series mode operation in which the power inputted by the engine 18 is outputted to the rear wheels 12r with the brake BR being placed in the released state. In the Mode2, a power conversion is made between the engine 18 and the first electric motor MG1, and between the first electric motor MG1 and the third electric motor MG3. The power conversion means a conversion between the mechanical power and the electric power. In the Mode2, an explosive vibration torque of the engine 18 is not transmitted to the front drive shafts 14f, so that the Mode2 is advantageous for suppressing NV. The term "NV" is a general term for noise and vibration such as muffled sound generated in the vehicle 8, and represents at least one of the noise and vibration in the vehicle 8. Therefore, the Mode2 is useful for use in a low running speed and low load range in which quietness is required. In addition, since the Mode2 is less subjected to restrictions such as the muffled sound when an operating point of the engine 18 is to be set, it is possible to operate the engine 18 at an operating point at which a fuel efficiency is excellent.

In the case shown in FIG. 6B, the Mode2 includes a mode in which the power driving of the first electric motor MG1 is performed with the electric power generated by the third electric motor MG3 that is operated as the electric generator, whereby the engine 18 is driven and rotated. In this Mode2, the electric power consumed by the power driving of the first electric motor MG1 is covered by the regenerative power of the third electric motor MG3, which is generated by a kinetic energy of the vehicle 8, and the engine rotational speed Ne is increased by the power driving of the first electric motor MG1. The engine 18 is in a fuel cut state, and the engine rotational speed Ne is increased by the first electric motor torque Tmg1, and the torque converted onto the axis of the first rotary element RE1 is considered to be a negative torque. Even where the engine 18 is operated with the fuel being injected thereto, if the engine rotational speed Ne is increased by the first electric motor torque Tmg1 to a higher speed vale than when the engine 18 is in an independent operating state, the torque converted onto the axis of the first rotary element RE1 is considered to be a negative torque. The positive direction of the torque is the direction of the torque in a case in which the engine 18 is operated. The case in which the engine 18 is operated is synonymous with a case in which the positive torque is generated by the engine 18 as such. In the Mode2 shown in FIG. 6B, the kinetic energy of the vehicle 8 is converted into the electric power through the third electric motor MG3, and the electric power generated by the third electric motor MG3 is converted into the power through the first electric motor MG1. In this way, the engine brake can be applied in the Mode2. Where the engine brake is applied in the Mode2, too, the explosive vibration torque of the engine 18 is not transmitted to the front drive shafts 14f, which is advantageous for suppressing the NV.

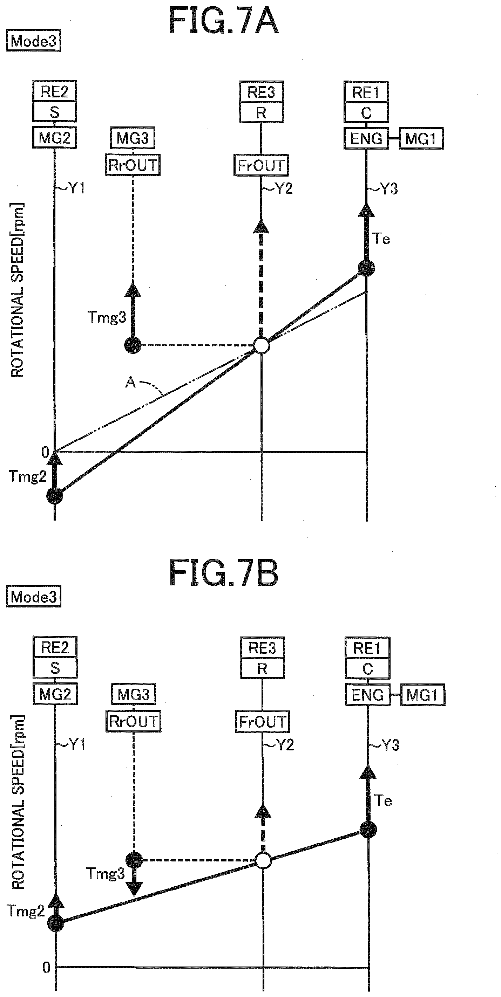

FIGS. 7A and 7B are collinear diagrams for explaining second HEV mode, i.e., Mode3 in which the engine 18 is operated whereby the electric power is transferred between the second and third electric motors MG2, MG3, wherein FIG. 7A shows a case in which the third electric motor MG3 is caused to generate the torque by the electric power generated by the second electric motor MG2, and FIG. 7B shows a case in which the second electric motor MG2 is caused to generate the torque by the electric power generated by the third electric motor MG3. The Mode3 is one of the plurality of modes into which the drive mode of the vehicle 8 can be placed. The Mode3 is a mode enabling the hybrid driving, i.e., HEV driving, and is an input split mode enabling an input split driving with the engine 18 as the power source. In the Mode3, the differential mechanism 24 is in the differential state, and a reaction force of the engine torque Te is taken by the second electric motor MG2, so that the torque is mechanically transmitted to the third rotary element RE3. The Mode3 is a mode that can realize the electric-continuously-variable transmission function that performs an input split mode operation in which the power inputted by the engine 18 is outputted to the front and rear wheels 12f, 12r with the brake BR being placed in the released state. In the Mode3, the engine brake can be applied. It is noted that the input split mode is a mode in which two electric motors (MG2, MG3) and an engine are connected to three rotary elements of a differential mechanism, and an electric motor (MG3) is placed on the output element (RE3), when expressed using a collinear diagram.

In FIG. 7A, double-dashed line A shows a state in which a mechanical point is created in the differential mechanism 24 in which no electrical work is made by setting the rotational speed of the second rotary element RE2 (second electric motor speed Nmg2) to zero so as to set the power of the second electric motor MG2 to zero. In the differential mechanism 24, the rotational speed of the third rotary element RE3 as the output element is set to a deceleration side, i.e., underdrive (U/D) side, relative to the engine rotational speed Ne at this mechanical point. That is, the mechanical point of the differential mechanism 24 is set by a speed reduction ratio. In FIGS. 7A and 7B, the Mode3 is the U/Dinput split mode.

In FIG. 7A, the Mode3 includes at least a mode in which the engine 18 is operated whereby the second electric motor MG2 is operated as the electric generator, while the third electric motor MG3 is operated as the prime mover by the electric power generated by the second electric motor MG2. In the Mode3, the torque is mechanically transmitted to the third rotary element RE3, and the electric power generated by the second electric motor MG2 is supplied to the third electric motor MG3 whereby the torque is generated in the third electric motor MG3. In the Mode3, the power conversion is made between the engine 18 and the second electric motor MG2, and between the second electric motor MG2 and the third electric motor MG3. The Mode3 provides a high transmission efficiency in the low running speed and high load range, so that it is useful in the low running speed and high load range, for example.

In FIG. 7B, the Mode3 may include a mode in which the engine 18 is operated while the second electric motor MG2 is operated as the prime mover using the electric power generated by the third electric motor MG3. In this Mode3, when the torque is mechanically transmitted to the third rotary element RE3, the second electric motor MG2 is rotated in the forward direction, so that the electric power consumed by the power driving of the second electric motor MG2 is covered by the regenerative power of the third electric motor MG3 using the kinetic energy of the vehicle 8. In the Mode3 shown in FIG. 7B, the kinetic energy of the vehicle 8 is converted into the electric power through the third electric motor MG3, and the electric power generated by the third electric motor MG3 is converted into the power through the second electric motor MG2.

The vehicle drive apparatus 10 is controlled to perform the Mode3 shown in FIG. 7A during a normal driving in which the drive mode is selected with an energy efficiency being prioritized. On the other hand, the vehicle drive apparatus 10 is controlled to perform the Mode3 shown in FIG. 7B, when the drive mode is selected with a power performance being prioritized, without the Mode3 shown in FIG. 7A being is not executed.

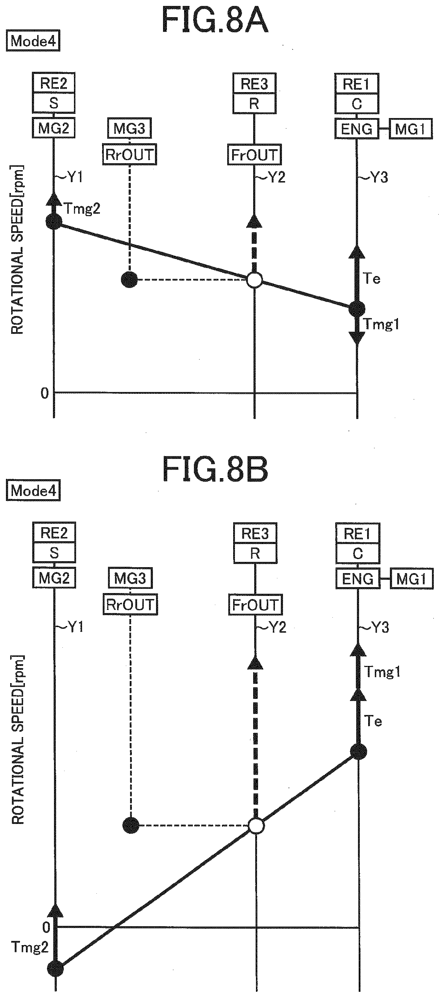

FIGS. 8A and 8B are collinear diagrams for explaining third HEV mode, i.e., Mode4 in which the engine 18 is operated whereby the electric power is transferred between the first and second electric motors MG1, MG2, wherein FIG. 8A shows a case in which the second electric motor MG2 is caused to generate the torque by the electric power generated by the first electric motor MG1, and FIG. 8B shows a case in which the first electric motor MG1 is caused to generate the torque by the electric power generated by the second electric motor MG2. The Mode4 is one of the plurality of modes into which the drive mode of the vehicle 8 can be placed. The Mode4 is a mode enabling the hybrid driving, i.e., HEV driving, and is an output split mode enabling an output split driving with the engine 18 as the power source. In the Mode4, the differential mechanism 24 is in the differential state, and a reaction force of the engine torque Te is taken by the second electric motor MG2, so that the torque is mechanically transmitted to the third rotary element RE3. The Mode4 is a mode that can realize the electric-continuously-variable transmission function that performs an output split mode operation in which the power inputted by the engine 18 is outputted to the front wheels 12f with the brake BR being placed in the released state. In the Mode3, the engine brake can be applied. Since the mechanical point of the differential mechanism 24 is set by a speed reduction ratio, the Mode4 shown in FIGS. 8A and 8B is U/Doutput split mode. It is noted that the output split mode is a mode in which two electric motors (MG1, MG2) and an engine are connected to three rotary elements of a differential mechanism, and an electric motor (MG1) is placed on the input element (RE1) to which the engine is connected, when expressed using a collinear diagram.

In FIG. 8A, the Mode4 includes at least a mode in which the engine 18 is operated whereby the first electric motor MG1 is operated as the electric generator, while the second electric motor MG2 is operated as the prime mover by the electric power generated by the first electric motor MG1. In Mode4, when the torque is mechanically transmitted to the third rotary element RE3, the second electric motor MG2 is rotated in the forward direction, so that the electric power consumed by the power driving of the second electric motor MG2 is covered by the electric power generated by the first electric motor MG1 using the power of the engine 18. In the Mode4, the power of the engine 18 is converted into the electric power through the first electric motor MG1, and the electric power generated by the first electric motor MG1 is converted into the power through the second electric motor MG2. The Mode4 provides a high transmission efficiency in the high running speed range, so that it is useful in the high running speed range, for example.

In FIG. 8B, the Mode4 may include a mode in which the engine 18 is operated while the first electric motor MG1 is operated as the prime mover using the electric power generated by the second electric motor MG2. In this Mode4, when the torque is mechanically transmitted to the third rotary element RE3, the second electric motor MG2 is rotated in the reverse direction, so that the electric power generated by the second electric motor MG2 is supplied to the first electric motor MG1 whereby the torque is generated in the first electric motor MG1. In the Mode4 shown in FIG. 8B, the power of the engine 18 is converted into the electric power through the second electric motor MG2, and the electric power generated by the second electric motor MG2 is converted into the power through the first electric motor MG1.

The vehicle drive apparatus 10 is controlled to perform the Mode4 shown in FIG. 8A during the normal driving in which the drive mode is selected with the energy efficiency being prioritized. On the other hand, the vehicle drive apparatus 10 is controlled to perform the Mode4 shown in FIG. 8B, when the drive mode is selected with a power performance being prioritized, without the Mode4 shown in FIG. 8A being is not executed.

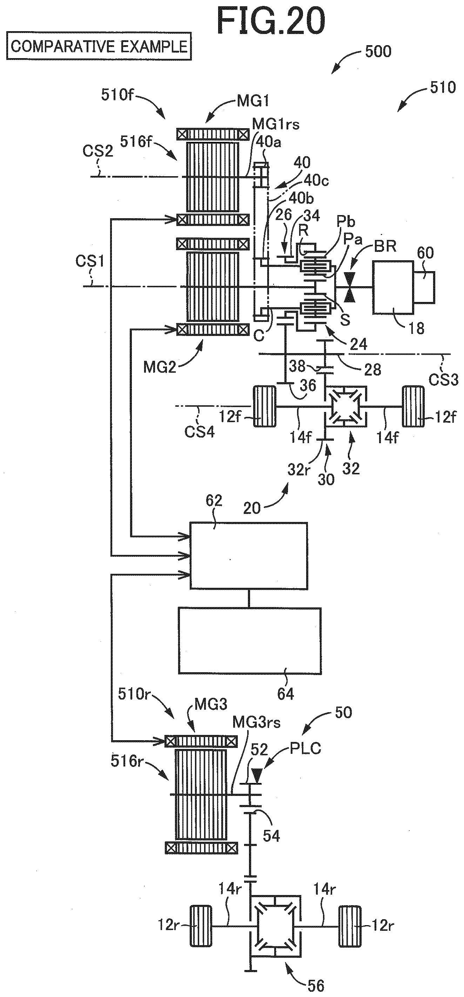

By the way, it is desirable to reduce the axial dimension of the front drive unit 16f. FIG. 20 is a view schematically showing a construction of a vehicle 500 provided with a vehicle drive apparatus 510 (including a front drive portion 510f and a rear drive portion 510r) of a comparative example. The vehicle drive apparatus 510 has a drive unit 516 (including a front drive unit 516f and a rear drive unit 516r) that is substantially the same as the drive unit 16 of the vehicle drive apparatus 10 shown in FIG. 1, in terms of connection relationship of each member. However, the arrangement of the members in the front drive unit 516f of the front drive portion 510f is different from that in the front drive unit 16f of the vehicle drive apparatus 10. In the front drive unit 516f of the comparative example, the second electric motor MG2, the differential mechanism 24 and the counter drive gear 34 are disposed on the first axis CS1, such that the differential mechanism 24, the counter drive gear 34 and the second electric motor MG2 are arranged in this order of description as viewed in a direction away from the engine 18. Further, the final drive gear 38 is located closer to the engine 18 than the counter driven gear 36 in a direction of the counter driven shaft 28, i.e., the third axis CS3. Moreover, the pair of final gears 30 connected to the front drive shafts 14f through the front differential gear device 32 is physically restricted in a direction of the fourth axis CS4, i.e., a width of the vehicle 500, by the position of the engine 18. Therefore, to the extent that the pair of final gears 30 (synonymous with the front differential gear device 32) cannot be moved toward the engine 18, the second electric motor MG2, the differential mechanism 24 and the counter drive gear 34 are necessarily distant from the engine 18 in the direction of the first axis CS1. As a result, the axial dimension of the front drive unit 516f is increased. It is noted that the rear drive portion 510r is substantially the same as the rear drive portion 10r, so that the description is not provided.

Referring back to FIG. 1, in the front drive unit 16f of the present embodiment, the counter drive gear 34, the differential mechanism 24 and the second electric motor MG2 are disposed on the first axis CS1, and are arranged in this order of description as viewed in a direction away from the engine 18. That is, among the counter drive gear 34, the differential mechanism 24 and the second electric motor MG2, the counter drive gear 34 is the closest to the engine 18 in the direction of the first axis CS1, and the second electric motor MG2 is the most far from the engine 18 in the direction of the first axis CS1. The final drive gear 38 is located closer to the second electric motor MG2 than the counter driven gear 36 in the direction of the counter driven shaft 28, i.e., the direction of the third axis CS3.

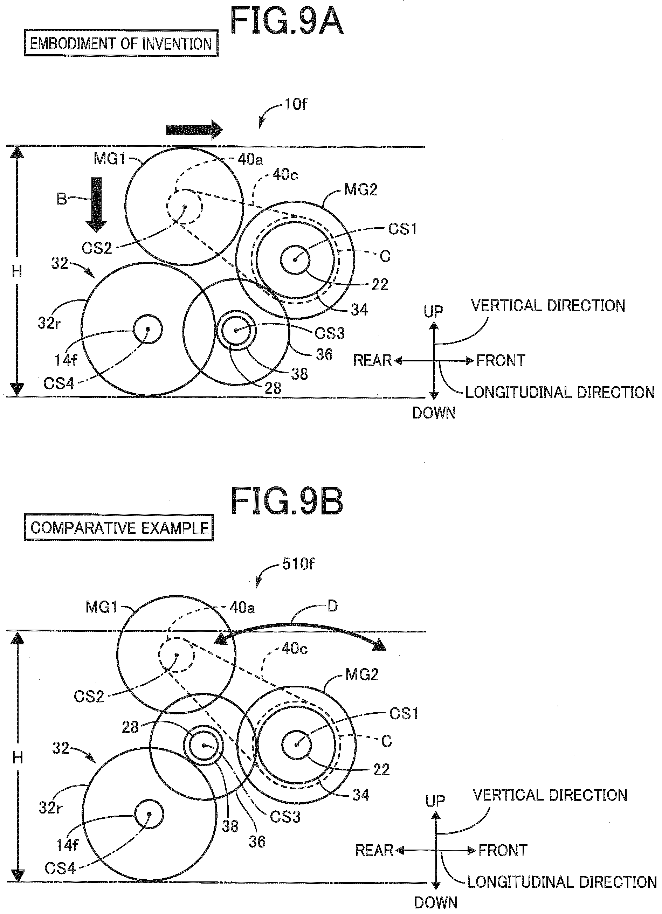

FIGS. 9A and 9B are views showing, by way of example, arrangements of various components of the front drive portion, wherein FIG. 9A shows the arrangement of the components of the front drive portion 10f in the present embodiment, and FIG. 9B shows the arrangement of the components of the front drive portion 510f in the comparative example.

In FIG. 9A, when the front drive portion 10f is installed in the vehicle 8, the first axis CS1, second axis CS2, third axis CS3 and fourth axis CS4 are arranged such that they are parallel to a horizontal direction perpendicular to a longitudinal direction (i.e., forward and backward movement direction) of the vehicle 8. The same is true for the front drive portion 510f shown in FIG. 9B. As shown in FIG. 9A, when the counter driven shaft 28 of the front drive portion 10f is installed in the vehicle 8, the counter driven shaft 28 is located vertically lower than the first axis CS1. In the front drive portion 10f, the first electric motor MG1, i.e., the second axis CS2, can be brought closer to the front drive shafts 14f (see arrow B) while avoiding interference between the belt 40c and the counter driven shaft 28 or the final drive gear 38. Thus, in the front drive portion 10f, the vertical size can be reduced. On the other hand, as shown in FIG. 9B, the counter driven shaft 28 of the front drive portion 510f is located in substantially the same height position as the first axis CS1 or in a height position higher than the first axis CS1, when being installed in the vehicle 500. Therefore, in front drive portion 510f, in order to avoid interference between the belt 40c and the counter driven shaft 28 or the final drive gear 38, the first electric motor MG1 needs to be located above in the vertical direction or forward in the longitudinal direction of the vehicle (see arrow D). As a result, there is a risk that the vertical size of the front drive portion 510f could be inevitably increased (see vertical height H).

As described above, in the present embodiment, the differential mechanism 24 is constructed, such that the engine 18 and the first electric motor MG1 are connected to the first rotary element RE1, such that the second electric motor MG2 is connected to the second rotary element RE2, and such that the front drive shafts 14f is connected to the third rotary element RE3. Thus, the various modes can be established as the drive mode in the vehicle drive apparatus 10. Further, the counter drive gear 34, the differential mechanism 24 and the second electric motor MG2 are disposed on the first axis CS1 that is parallel to the counter driven shaft 28, and the first electric motor MG1 is disposed on the second axis CS2 which is parallel with the first axis CS1 and is connected to the first rotary element RE1 through the power transmission mechanism 40. Thus, it is possible to reduce an axial dimension of the front drive unit 16f. Further, the counter drive gear 34 is located closer to the engine 18 than the differential mechanism 24. Thus, the axial dimension of the front drive unit 16f can be further reduced than in an arrangement (see FIG. 20) in which the counter drive gear 34 is located closer to the second electric motor MG2 than the differential mechanism 24. Therefore, the axial dimension of the front drive unit 16f can be made small in the vehicle drive apparatus 10 in which the various modes can be established.

In the present embodiment, the differential mechanism 24 is of double pinion type, wherein the first rotary element RE1 is the carrier C, the second rotary element RE2 is the sun gear S and the third rotary element RE3 is the ring gear R. Thus, it is possible to reduce the axial dimension of the front drive unit 16f in a case where the mechanical point is set by the speed reduction ratio in the differential mechanism 24. Further, it is possible to simplify a construction for connecting the front drive shafts 14f to the third rotary element RE3 through the pair of counter gears 26 and the pair of final gears 30, and to reduce the size of the front drive unit 16f.

In the present embodiment, the counter driven shaft 28 is located on the lower side of the first axis CS1 in the vertical direction of the vehicle 8 when the drive vehicle apparatus 10 is installed in the vehicle 8. Thus, the second axis CS2 can be located close to the front drive shafts 14f, whereby the size of the vehicle drive apparatus 10 can be reduced.

In the present embodiment, the final drive gear 38 is located between the counter driven gear 28 and the second electric motor MG2 in the direction parallel with the counter driven shaft 28. Thus, the counter drive gear 34 is located closer to the engine 18 than the differential mechanism 24, whereby the axial dimension of the front drive unit 16f can be appropriately reduced.

In the present embodiment, the final driven gear 32r is the input rotary member of the front differential gear device 32 to which the front drive shafts 14f is connected. Thus, the counter drive gear 34 is located closer to the engine 18 than the differential mechanism 24, whereby the axial dimension of the front drive unit 16f can be appropriately reduced.

In the present embodiment, the front drive unit 16f further includes the brake BR configured to stop the rotation of the first rotary element RE1 by being placed in the engaged state. Thus, in the vehicle drive apparatus 10, it is possible to establish various modes including a mode in which a motor driving, i.e., BEV driving, which is performed by the second electric motor MG2 as a power source, with the engine 18 being stopped.

In the present embodiment, the third electric motor MG3 is connected to the rear drive shafts 14r. Thus, in the vehicle drive apparatus 10, it is possible to establish various modes including a mode in which a so-called series driving is performed. When the vehicle 8 is driven with the engine 18 being operated, the series driving can be performed, for example, by causing the rear drive shafts 14r to be driven by operation of the third electric motor MG3 as a prime mover, which is made by the electric power generated by the first electric motor MG1 owing to the power of the engine 18.

There will be described other embodiments of this invention. The same reference signs as used in the above-described first embodiment will be used in the following embodiments, to identify the functionally corresponding elements, and descriptions thereof are not provided.

### SECOND EMBODIMENT

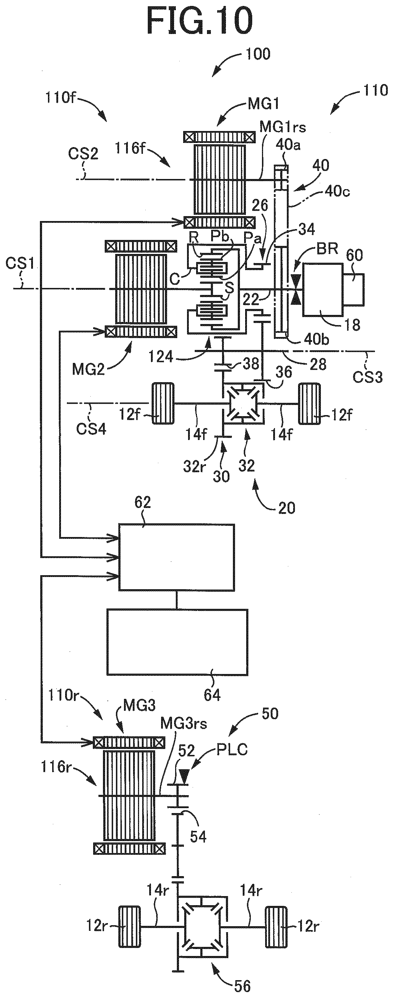

FIG. 10 is a view schematically showing a construction of a vehicle 100 provided with a vehicle drive apparatus 110 (including a front drive portion 110f and a rear drive portion 110r) to which the present invention is applied. As shown in FIG. 10, the vehicle drive apparatus 110 includes the drive shafts 14 for driving the drive wheels 12 and a drive unit 116 (including a front drive unit 116f and a rear drive unit 116r) for driving the drive shafts 14. The front drive unit 116f includes a differential mechanism 124, and corresponds to "first drive unit" recited in the appended claims. As in the above-described first embodiment, the differential mechanism 124 is connected to the front drive shafts 14f through the front power transmission mechanism 20, for example. The rear drive unit 116r corresponds to "second drive unit" recited in the appended claims.

The differential mechanism 124 corresponds to "planetary gear device of double pinion type" recited in the appended claims, and includes a sun gear S, pinion gears Pa, Pb, a carrier C and a ring gear R. The sun gear S is connected to the second electric motor MG2. The ring gear R is connected to the engine 18 and the first electric motor MG1. The carrier C is connected to the front drive shafts 14f through the pair of counter gears 26 and the pair of final gears 30, for example.

The first electric motor MG1 is connected to the input shaft 22 connected to the ring gear R, through the power transmission mechanism 40. In this second embodiment, the second intermediate gear 40b is fixedly disposed on the input shaft 22 so as to be unrotatable relative to the input shaft 22. The brake BR is connected at one of its opposite end portions to the input shaft 22, and is connected at the other of the opposite end portions to a non-rotatable member such as a casing (not shown).

In the front drive unit 116f, the counter drive gear 34, the differential mechanism 124 and the second electric motor MG2 are disposed on the first axis CS1, and are arranged in this order of description as viewed in a direction away from the engine 18. The final drive gear 38 is located closer to the second electric motor MG2 than the counter driven gear 36 in the direction of the counter driven shaft 28.

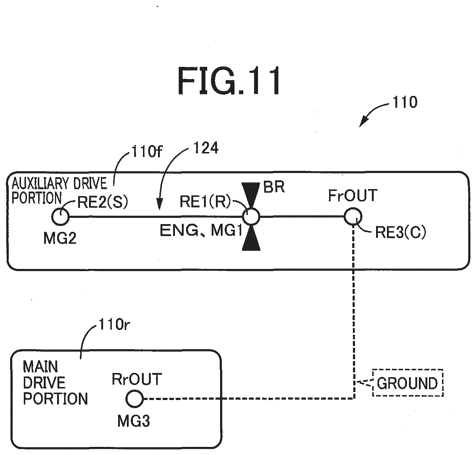

FIG. 11 is a view showing a construction of the vehicle drive apparatus 110, by using a collinear diagram. As shown in FIG. 11, the differential mechanism 124 of the front drive portion 110f includes three rotary elements consisting of a first rotary element RE1, a second rotary element RE2 and a third rotary element RE3. Each of the rotary elements RE1-RE3 of the differential mechanism 124 is connected to an actuator. Expressing using the collinear diagram, the first rotary element RE1 is the ring gear R. The first rotary element RE1 is connected to the engine 18 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 14f, i.e., the front wheels 12f, through the pair of counter gears 26 and the pair of final gears 30, for example. The brake BR corresponds to "brake mechanism" recited in the appended claims, and is configured to stop rotation of the first rotary element RE1 by being placed in an engaged state. It is noted that the rear drive portion 110r is substantially the same as the rear drive portion 10r in the above-described first embodiment, so that the description is not provided.

As in the vehicle drive apparatus 10 of the above-described first embodiment, in the vehicle drive apparatus 110, the engine 18 and the first through third electric motors MG1, MG2, MG3 are controlled whereby the drive mode of the vehicle 100 can be placed into a selected one of a plurality of modes.

At the mechanical point of the differential mechanism 124, the rotational speed of the third rotary element RE3, which is the output element, is set to an acceleration side, i.e., to overdrive (O/D) side, relative to the engine rotational speed Ne. In other words, the mechanical point of the differential mechanism 124 is set by a speed increase ratio. Therefore, in the vehicle drive apparatus 110, Mode 3 is the O/D input split mode, and Mode 4 is the O/D output split mode.

As described above, in this second embodiment, as in the above-described first embodiment, an axial dimension of the front drive unit 116f can be made small in the vehicle drive apparatus 110 in which the various modes can be established.

In the present second embodiment, the differential mechanism 124 is of double pinion type, wherein the first rotary element RE1 is the ring gear R, the second rotary element RE2 is one of the sun gear S, and the third rotary element RE3 is the carrier C. Thus, it is possible to reduce the axial dimension of the front drive unit 116f in a case where the mechanical point is set by a speed increase ratio in the differential mechanism 124.

### THIRD EMBODIMENT

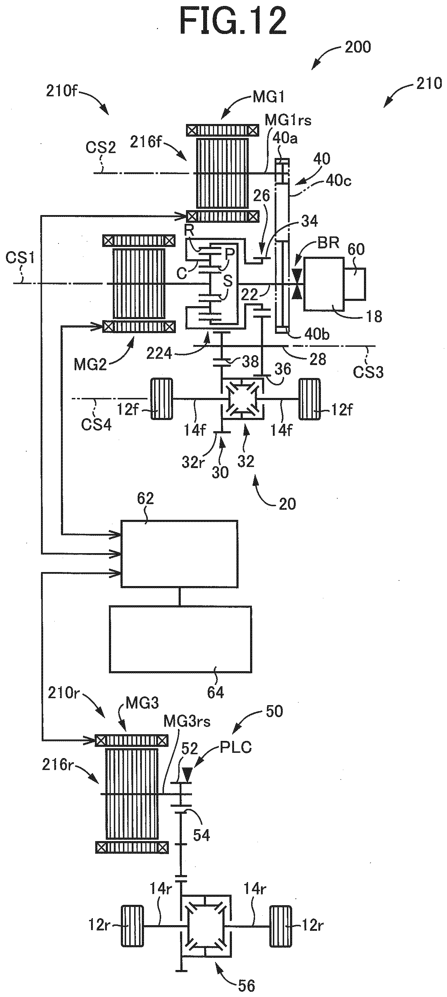

FIG. 12 is a view schematically showing a construction of a vehicle 200 provided with a vehicle drive apparatus 210 (including a front drive portion 210f and a rear drive portion 210r) to which the present invention is applied. As shown in FIG. 12, the vehicle drive apparatus 210 includes the drive shafts 14 for driving the drive wheels 12 and a drive unit 216 (including a front drive unit 216f and a rear drive unit 216r) for driving the drive shafts 14. The front drive unit 216f includes a differential mechanism 224, and corresponds to "first drive unit" recited in the appended claims. As in the above-described first embodiment, the differential mechanism 224 is connected to the front drive shafts 14f through the front power transmission mechanism 20, for example. The rear drive unit 216r corresponds to "second drive unit" recited in the appended claims.

The differential mechanism 224 corresponds to "planetary gear device of single pinion type" recited in the appended claims, and includes a sun gear S, pinion gears P, a carrier C and a ring gear R. The sun gear S is connected to the second electric motor MG2. The ring gear R is connected to the engine 18 and the first electric motor MG1. The carrier C is connected to the front drive shafts 14f through the pair of counter gears 26 and the pair of final gears 30, for example.

The first electric motor MG1 is connected to the input shaft 22 connected to the ring gear R, through the power transmission mechanism 40. In this third embodiment, the second intermediate gear 40b is fixedly disposed on the input shaft 22 so as to be unrotatable relative to the input shaft 22. The brake BR is connected at one of its opposite end portions to the input shaft 22, and is connected at the other of the opposite end portions to a non-rotatable member such as a casing (not shown).

In the front drive unit 216f, the counter drive gear 34, the differential mechanism 224 and the second electric motor MG2 are disposed on the first axis CS1, and are arranged in this order of description as viewed in a direction away from the engine 18. The final drive gear 38 is located closer to the second electric motor MG2 than the counter driven gear 36 in the direction of the counter driven shaft 28.

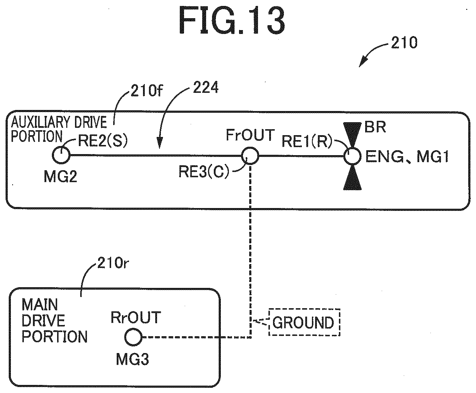

FIG. 13 is a view showing a construction of the vehicle drive apparatus 210, by using a collinear diagram. As shown in FIG. 13, the differential mechanism 224 of the front drive portion 210f includes three rotary elements consisting of a first rotary element RE1, a second rotary element RE2 and a third rotary element RE3. Each of the rotary elements RE1-RE3 of the differential mechanism 224 is connected to an actuator. Expressing using the collinear diagram, the first rotary element RE1 is the ring gear R. The first rotary element RE1 is connected to the engine 18 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 14f, i.e., the front wheels 12f, through the pair of counter gears 26 and the pair of final gears 30, for example. The brake BR corresponds to "brake mechanism" recited in the appended claims, and is configured to stop rotation of the first rotary element RE1 by being placed in an engaged state. It is noted that the rear drive portion 210r is substantially the same as the rear drive portion 10r in the above-described first embodiment, so that the description is not provided.

As in the vehicle drive apparatus 10 of the above-described first embodiment, in the vehicle drive apparatus 210, the engine 18 and the first through third electric motors MG1, MG2, MG3 are controlled whereby the drive mode of the vehicle 200 can be placed into a selected one of a plurality of modes.

At the mechanical point of the differential mechanism 224, the rotational speed of the third rotary element RE3, which is the output element, is set to a deceleration side, i.e., to underdrive (U/D) side, relative to the engine rotational speed Ne. In other words, the mechanical point of the differential mechanism 224 is set by a speed reduction ratio. Therefore, in the vehicle drive apparatus 210, Mode 3 is the U/D input split mode, and Mode 4 is the U/D output split mode.

As described above, in this third embodiment, as in the above-described first embodiment, an axial dimension of the front drive unit 216f can be made small in the vehicle drive apparatus 210 in which the various modes can be established.

In the present third embodiment, the differential mechanism 224 is of single pinion type, wherein the first rotary element RE1 is the ring gear R, the second rotary element RE2 is the sun gear S, and the third rotary element RE3 is the carrier C. Thus, it is possible to reduce the axial dimension of the front drive unit 216f in a case where the mechanical point is set by a speed reduction ratio in the differential mechanism 224.

### FOURTH EMBODIMENT

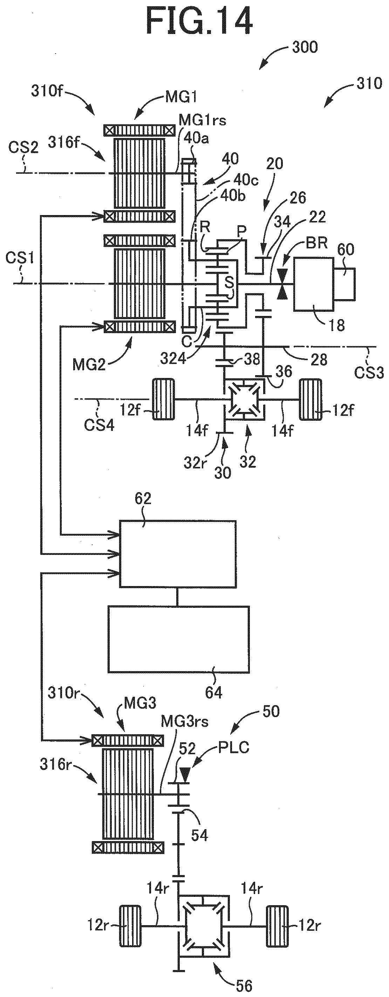

FIG. 14 is a view schematically showing a construction of a vehicle 300 provided with a vehicle drive apparatus 310 (including a front drive portion 310f and a rear drive portion 310r) to which the present invention is applied. As shown in FIG. 14, the vehicle drive apparatus 310 includes the drive shafts 14 for driving the drive wheels 12 and a drive unit 316 (including a front drive unit 316f and a rear drive unit 316r) for driving the drive shafts 14. The front drive unit 316f includes a differential mechanism 324, and corresponds to "first drive unit" recited in the appended claims. As in the above-described first embodiment, the differential mechanism 324 is connected to the front drive shafts 14f through the front power transmission mechanism 20, for example. The rear drive unit 316r corresponds to "second drive unit" recited in the appended claims.

The differential mechanism 324 corresponds to "planetary gear device of single pinion type" recited in the appended claims, and includes a sun gear S, pinion gears P, a carrier C and a ring gear R. The sun gear S is connected to the second electric motor MG2. The carrier C is connected to the engine 18 and the first electric motor MG1. The ring gear R is connected to the front drive shafts 14f through the pair of counter gears 26 and the pair of final gears 30, for example.

As in the above-described first embodiment, the first electric motor MG1 is connected to the carrier C through the power transmission mechanism 40. The brake BR is connected at one of its opposite end portions to the input shaft 22, and is connected at the other of the opposite end portions to a non-rotatable member such as a casing (not shown).

In the front drive unit 316f, the counter drive gear 34, the differential mechanism 324 and the second electric motor MG2 are disposed on the first axis CS1, and are arranged in this order of description as viewed in a direction away from the engine 18. The final drive gear 38 is located closer to the second electric motor MG2 than the counter driven gear 36 in the direction of the counter driven shaft 28.

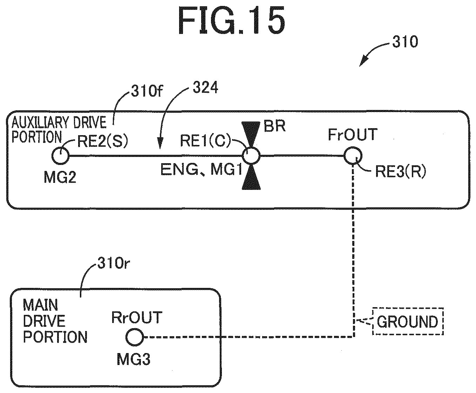

FIG. 15 is a view showing a construction of the vehicle drive apparatus 310, by using a collinear diagram. As shown in FIG. 15, the differential mechanism 324 of the front drive portion 310f includes three rotary elements consisting of a first rotary element RE1, a second rotary element RE2 and a third rotary element RE3. Each of the rotary elements RE1-RE3 of the differential mechanism 324 is connected to an actuator. Expressing using the collinear diagram, the first rotary element RE1 is the carrier C. The first rotary element RE1 is connected to the engine 18 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 14f, i.e., the front wheels 12f, through the pair of counter gears 26 and the pair of final gears 30, for example. The brake BR corresponds to "brake mechanism" recited in the appended claims, and is configured to stop rotation of the first rotary element RE1 by being placed in an engaged state. It is noted that the rear drive portion 310r is substantially the same as the rear drive portion 10r in the above-described first embodiment, so that the description is not provided.

As in the vehicle drive apparatus 10 of the above-described first embodiment, in the vehicle drive apparatus 310, the engine 18 and the first through third electric motors MG1, MG2, MG3 are controlled whereby the drive mode of the vehicle 300 can be placed into a selected one of a plurality of modes.

At the mechanical point of the differential mechanism 324, the rotational speed of the third rotary element RE3, which is the output element, is set to an acceleration side, i.e., to overdrive (O/D) side, relative to the engine rotational speed Ne. In other words, the mechanical point of the differential mechanism 324 is set by a speed increase ratio. Therefore, in the vehicle drive apparatus 310, Mode 3 is the O/D input split mode, and Mode 4 is the O/D output split mode.

As described above, in this fourth embodiment, as in the above-described first embodiment, an axial dimension of the front drive unit 316f can be made small in the vehicle drive apparatus 310 in which the various modes can be established.

In the present fourth embodiment, the differential mechanism 324 is of single pinion type, wherein the first rotary element RE1 is the carrier C, the second rotary element RE2 is the sun gear S, and the third rotary element RE3 is the ring gear R. Thus, it is possible to reduce the axial dimension of the front drive unit 316f in a case where the mechanical point is set by a speed increase ratio. Further, it is possible to simplify a construction for connecting the front drive shafts 14f to the third rotary element RE3 through the pair of counter gears 26 and the pair of final gears 30, and to reduce the size of the front drive unit 316f.

### FIFTH EMBODIMENT

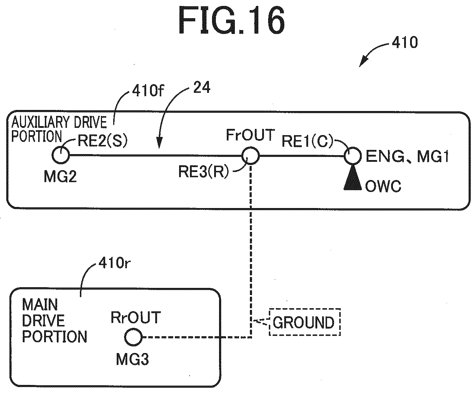

FIG. 16 is a view showing a construction of a vehicle drive apparatus 410 (including a front drive portion 410f and a rear drive portion 410r), by using a collinear diagram. As shown in FIG. 16, the vehicle drive apparatus 410 is different from the vehicle drive apparatus 10 of the above-described first embodiment in that the brake mechanism, which is configured to stop rotation of the first rotary element RE1 by being placed in the engaged state, is constituted by a one-way clutch OWC in place of the above-described brake BR is replaced by a one-way clutch OWC. In each of the vehicle drive apparatuses 110, 210, 310 of the above-described second through fourth embodiments, too, the brake mechanism may be constituted by the one-way clutch OWC in place of the brake BR .

The one-way clutch OWC has two rotary elements consisting of inner and outer rings, which can be rotatable relative to each other, one of which is connected to the first rotary element RE1, and the other of which is connected to a non-rotatable member such as a casing (not shown). In the one-way clutch OWC, the one of the inner and outer rings is rotatable relative to the other in a positive rotation direction that is a rotation direction of the engine 18 in operation, and is not rotatable relative to the other in a negative rotation direction that is opposite to the rotation direction of the engine 18 in operation. That is, the one-way clutch OWC allows the first rotary element RE1 to be rotated in the positive rotation direction that is the rotation direction of the engine 18, and inhibits the first rotary element RE1 from being rotated in the negative rotation direction that is opposite to the rotation direction of the engine 18. Thus, the one-way clutch OWC is automatically engaged and released by interaction between the inner and outer rings. Therefore, the one-way clutch OWC does not require a control command signal such as the brake control command signal Sbr for controlling the brake BR to be engaged or released.

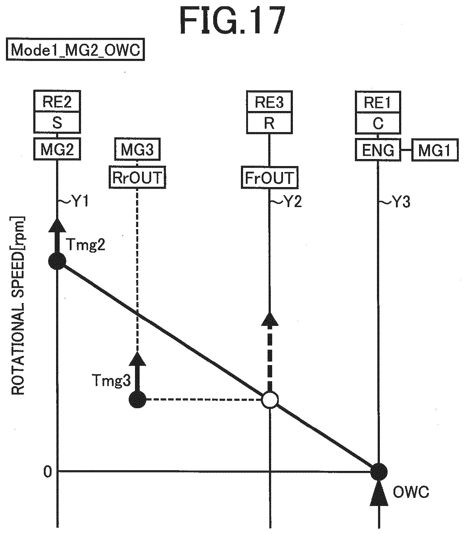

FIG. 17 is a collinear diagram for explaining Mode1_MG2_OWC, i.e., BEV mode in which the second electric motor MG2 is caused to generate the torque, with the one-way clutch OWC being in the engaged state. The Mode1_MG2_OWC is one of kinds of the Mode1 enabling the BEV driving. In FIG. 17, the Mode1_MG2_OWC is included in the plurality of modes in which the drive mode can be placed. The Mode1_MG2_OWC is a mode in which the BEV driving is performed by the torque generated by the second electric motor MG2 with the one-way clutch OWC being engaged and with the engine 18 being stopped. In the Mode1_MG2_OWC, the rotational speed of the first rotary element RE1 is fixed to zero due to the engagement of the one-way clutch OWC, so that the BEV driving can be performed by the second electric motor MG2 using the electric power of the battery 64. In this case, the BEV driving can be performed with the maximum torque of the second electric motor MG2. In Mode1_MG2_OWC, as shown in FIG. 17, it is also possible to increase the drive torque by causing the third electric motor MG3 to generate the torque.

As described above, in the present fifth embodiment, the same effects as those of the above-described first embodiment can be obtained.

### SIXTH EMBODIMENT

FIG. 18 is a view for explaining setting of helix angles of the counter drive gear 34 and the ring gear R of the differential mechanism 24 in the vehicle drive apparatus 10 of above-described first embodiment. As shown in FIG. 18, the front drive unit 16f further includes a bearing 80 supporting the counter drive gear 34. The bearing 80 supports the counter drive gear 34 such that the counter drive gear 34 is rotatable relative to the front casing 90, for example. The front casing 90 is the non-rotatable member that houses the front drive unit 16f. Each of the counter drive gear 34 and the sun gear S and the ring gear R of the differential mechanism 24 is a helical gear in which each tooth is inclined relative to an axis of the gear by the helix angle.

In the front drive unit 16f, the power of the engine 18 and the power of the second electric motor MG2 are inputted to the counter drive gear 34. If a large input load is applied to the bearing 80 in a construction of the front drive unit 16f, such a construction would require the bearing 80 to be increased in size and would cause a loss increase.

Therefore, in the front drive unit 16f, in order to reduce the input load applied to the bearing 80, at least a part of a thrust force applied on the counter drive gear 34 is offset by the thrust force applied to the ring gear R.

The helix angles of the sun gear S, the ring gear R and the counter drive gear 34 are determined such that a direction of the thrust force applied to the ring gear R by a meshing reaction force and a direction of the thrust force applied to the counter drive gear 34 by a meshing reaction force are opposite to each other. That is, the helix angles of the sun gear S, the ring gear R and the counter drive gear 34 are set such that the direction of the thrust force applied to the ring gear R and the direction of the thrust force applied to the counter drive gear 34 are opposite to each other.

In FIG. 18, black arrow DTra indicates the direction of the thrust force applied to the ring gear R, which is a direction toward the counter drive gear 34, while black arrow DTda indicates the direction of the thrust force applied to the counter drive gear 34, which is a direction opposite to the direction indicated by the black arrow DTra. In the front drive unit 16f, the helix angles of the sun gear S, the ring gear R and the counter drive gear 34 are set such that that the thrust forces are generated in the directions indicated by the black arrows DTra, DTda. Alternatively, in the front drive unit 16f, the helix angles of the sun gear S, the ring gear R and the counter drive gear 34 may be set such that that the thrust forces are generated in directions indicated by dashed arrows DTrb, DTdb, wherein the dashed arrow DTrb indicates the direction of the thrust force applied to the ring gear R, which is a direction away from the counter drive gear 34, while the dashed arrow DTdb indicates the direction of the thrust force applied to the counter drive gear 34, which is a direction opposite to the direction indicated by the dashed arrow DTrb.

In the present sixth embodiment, the sun gear S, the ring gear R and the counter drive gear 34 are the helical gears having respective helix angles that are set such that the direction of the thrust force applied to the ring gear R by the meshing reaction force and the direction of the thrust force applied to the counter drive gear 34 by the meshing reaction force are opposite to each other. Thus, at least a part of the thrust force applied to the counter drive gear 34 is offset by the thrust force applied to the ring gear R, whereby a load inputted to the bearing 80 supporting the counter drive gear 34 can be reduced so that it is possible to reduce a size of the bearing 80 and to reduce a loss. That is, the size of the bearing 80 and the loss can be reduced, in addition to the substantially the same effects as those obtained in the above-described first embodiment.

### SEVENTH EMBODIMENT

In the front drive unit 16f shown in FIG. 18, where the thrust force applied to the sun gear S by the meshing reaction force is directed in a direction away from the bearing 80, the input load applied to the bearing 80 can be reduced more than where the thrust force is directed in a direction toward the bearing 80. The differential mechanism 24 is a double pinion type planetary gear device. The differential mechanism 24 is the planetary gear device of double pinion type. Therefore, where the thrust force applied to the ring gear R is directed in the direction toward the counter drive gear 34, the thrust force applied to the sun gear S by the meshing reaction force is directed in the direction away from the bearing 80.

The helix angle of the ring gear R is set to an angle by which the thrust force applied to the ring gear R by the meshing reaction force is directed is a direction away from ring gear R the toward the counter drive gear 34. That is, the helix angles of the sun gear S, the ring gear R and the counter drive gear 34 are set such that the direction of the thrust force applied to the ring gear R is away from ring gear R the toward the counter drive gear 34.

In FIG. 18, black arrow DTsa indicates a direction of the thrust force applied to the sun gear S, which is opposite to the direction toward the bearing 80. In the front drive unit 16f, the helix angles of the sun gear S, ring gear R and counter drive gear 34 are set such that the thrust forces are directed in the directions indicated by the black arrows DTra, DTda, DTsa.

In the present seventh embodiment, the helix angle of the ring gear R is set such that the thrust force applied to the ring gear R by the meshing reaction force in the direction toward the counter drive gear 34. Thus, the direction of the thrust force applied to the sun gear S by the meshing reaction force is directed away from the bearing 80, so that it is possible to advantageously reduce the load inputted to the bearing 80 supporting the counter drive gear 34.

### EIGHTH EMBODIMENT

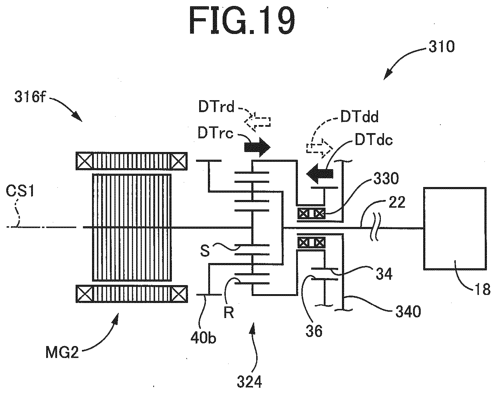

FIG. 19 is a view for explaining setting of the helix angles of the counter drive gear and the ring gear of the differential mechanism 324 in the vehicle drive apparatus 310 of the above-described fourth embodiment. As shown in FIG. 19, the front drive unit 316f further includes a bearing 330 supporting the counter drive gear 34. The bearing 330 supports the counter drive gear 34 such that the counter drive gear 34 is rotatable relative to a front casing 340, for example. The front casing 340 is the non-rotatable member that houses the front drive unit 316f. Each of the counter drive gear 34 and the sun gear S and the ring gear R of the differential mechanism 324 is a helical gear in which each tooth is inclined relative to an axis of the gear by the helix angle.

In the front drive unit 316f, the power of the engine 18 and the power of the second electric motor MG2 are inputted to the counter drive gear 34. If a large input load is applied to the bearing 330 in a construction of the front drive unit 316f, such a construction would require the bearing 330 to be increased in size and would cause a loss increase.

Therefore, in the front drive unit 316f, in order to reduce the input load applied to the bearing 330, at least a part of a thrust force applied on the counter drive gear 34 is offset by the thrust force applied to the ring gear R.

The helix angles of the sun gear S, the ring gear R and the counter drive gear 34 are determined such that a direction of the thrust force applied to the ring gear R by a meshing reaction force and a direction of the thrust force applied to the counter drive gear 34 by a meshing reaction force are opposite to each other. That is, the helix angles of the sun gear S, the ring gear R and the counter drive gear 34 are set such that the direction of the thrust force applied to the ring gear R and the direction of the thrust force applied to the counter drive gear 34 are opposite to each other.

In FIG. 19, black arrow DTrc indicates the direction of the thrust force applied to the ring gear R, which is a direction toward the counter drive gear 34, while black arrow DTdc indicates the direction of the thrust force applied to the counter drive gear 34, which is a direction opposite to the direction indicated by the black arrow DTrc. In the front drive unit 316f, the helix angles of the sun gear S, the ring gear R and the counter drive gear 34 are set such that that the thrust forces are generated in the directions indicated by the black arrows DTrc, DTdc. Alternatively, in the front drive unit 316f, the helix angles of the sun gear S, the ring gear R and the counter drive gear 34 may be set such that that the thrust forces are generated in directions indicated by dashed arrows DTrd, DTdd, wherein the dashed arrow DTrd indicates the direction of the thrust force applied to the ring gear R, which is a direction away from the counter drive gear 34, while the dashed arrow DTdd indicates the direction of the thrust force applied to the counter drive gear 34, which is a direction opposite to the direction indicated by the dashed arrow DTrd.

In the present eighth embodiment, the sun gear S, the ring gear R and the counter drive gear 34 are the helical gears having respective helix angles that are set such that the direction of the thrust force applied to the ring gear R by the meshing reaction force and the direction of the thrust force applied to the counter drive gear 34 by the meshing reaction force are opposite to each other. Thus, at least a part of the thrust force applied to the counter drive gear 34 is offset by the thrust force applied to the ring gear, whereby the load inputted to the bearing 330 supporting the counter drive gear 34 can be reduced so that it is possible to reduce a size of the bearing 330 and to reduce a loss. That is, the size of the bearing 330 and the loss can be reduced, in addition to the substantially the same effects as those obtained in the above-described fourth embodiment.

While the preferred embodiments of this invention have been described in detail by reference to the drawings, it is to be understood that the invention may be otherwise embodied.

For example, the rear drive portion (10r; 110r; 210r; 310r; 410r) may be omitted in the above-described first through eighth embodiments. Even without the rear drive portion (10r; 110r; 210r; 310r; 410r), it is possible to carry out the present invention in which the first electric motor (MG1) is disposed on the second axis (CS2), and the counter drive gear (34) is located closer to the engine (18) than the differential mechanism (24, 124, 224, 324). Further, it is possible to establish various modes such as the above-described "Mode1_MG2", "Mode1_MG2 _Bron", "Mode4" and "Mode1_MG2_OWC", as the drive mode of the vehicle.

In the differential mechanism 24 in the above-described first and fifth through seventh embodiments, the first rotary element RE1 may be any one of the carrier C and the sun gear S, while the second rotary element RE2 may be is the other of the carrier C and the sun gear S. Where the first rotary element RE1 is the sun gear S while the second rotary element RE2 is the carrier C, the engine 18 and the first electric motor MG1 are connected to the sun gear S while the second electric motor MG2 is connected to the carrier C.

In the differential mechanism 124 in the above-described second embodiment, the second rotary element RE2 may be any one of the sun gear S and the carrier C, while the third rotary element RE3 may be the other of the sun gear S and the carrier C. Where the second rotary element RE2 is the carrier C while the third rotary element RE3 is the sun gear S, the second electric motor MG2 is connected to the carrier C while the front drive shafts 14f are connected to the sun gear S.

In the differential mechanism 224 in the above-described third embodiment, the first rotary element RE1 may be any one of the ring gear R and the sun gear S, while the second rotary element RE2 may be is the other of the ring gear R and the sun gear S. Where the first rotary element RE1 is the sun gear S while the second rotary element RE2 is the ring gear R, the engine 18 and the first electric motor MG1 are connected to the sun gear S while the second electric motor MG2 is connected to the ring gear R.

In the differential mechanism 324 in the above-described fourth embodiment, the second rotary element RE2 may be any one of the sun gear S and the ring gear R, while the third rotary element RE3 may be the other of the sun gear S and the ring gear R. Where the second rotary element RE2 is the ring gear R while the third rotary element RE3 is the sun gear S, the second electric motor MG2 is connected to the ring gear R while the front drive shafts 14f are connected to the sun gear S. In the differential mechanism 324 in the above-described eight embodiment, the second rotary element RE2 is necessarily the sun gear S while the third rotary element RE3 is necessarily the ring gear R.

As shown in the above-described first through eighth embodiments, the second rotary element RE2 is a rotary element located in one of opposite ends in the collinear diagram in which the three rotary elements of the differential mechanism are arranged in a straight line.

In the above-described first through eighth embodiments, the power transmission mechanism 40 may be, for example, a pair of gears or a combination of chain and sprocket. Where the power transmission mechanism 40 is the pair of gears, the first intermediate gear 40a and the second intermediate gear 40b are connected to each other through a counter gear that meshes with the first intermediate gear 40a and the second intermediate gear 40b.

In the above-described first through fourth and sixth through eighth embodiments, the brake BR does not necessarily have to be provided. In a case without provision of the brake BR, among kinds of the Mode1, the Mode1_MG2_BRon is not executed. As described above, in the Mode1_MG3, the BEV driving can be performed even if the brake BR is not engaged, so that the Mode1_MG3 can be executed even if the brake BR is not provided.

In the above-described fifth embodiment, the one-way clutch OWC does not necessarily have to be provided. In a case without provision of the one-way clutch OWC, the Mode1_MG2_OWC is not executed. Further, in the case without provision of the one-way clutch OWC, it is possible to execute the Mode1_MG2 in which the BEV driving can be performed with the first electric motor MG1 being caused to generate the torque. Further, the Mode1_MG3 can be executed even if the one-way clutch OWC is not provided.

In the above-described first through eighth embodiments, one of the front and rear wheels 12f, 12r, to which the powers of the engine 18 and the second electric motor MG2 are to be transmitted, may be the rear wheel 12r in place of the front wheel 12f, while the other of the front and rear wheels 12f, 12r, to which the power of the third electric motor MG3 is to be transmitted, may be the front wheel 12f in place of the rear wheel 12r. In other words, the first drive shaft may be each of the rear drive shafts 14r while the second drive shaft may be each of the front drive shafts 14f.

In the above-described first through eighth embodiments, the drive portion including the third electric motor MG3 is the main drive portion in the PHEV in which it is expected that the BEV driving in the Mode1_MG3 will be used frequently. However, the drive portion including the engine 18 and the second electric motor MG2 may be the main drive portion in the HEV.

In the above-described first through eighth embodiments, the front power transmission mechanism 20 may further include a clutch mechanism that is configured to cut off the power transmission between the third rotary element RE3 and the front drive shafts 14f, by being placed in its released state. The clutch mechanism is controlled to be placed in the released state when the vehicle is caused to run, for example, in the Mode1_MG3, i.e., the BEV mode in which the third electric motor MG3 is caused to generate the torque. Thus, it is possible to prevent power loss caused by dragging of the second electric motor MG2 or other components located on an upstream side of the front drive shafts 14f, during the BEV driving in which the vehicle is caused to run by using the third electric motor MG3 as the power source.

In the above-described first through eighth embodiments, the rear power transmission mechanism 50 may further include a clutch mechanism that is configured to cut off the power transmission between the third electric motor MG3 and the rear drive shafts 14r, by being placed in its released state. The clutch mechanism is controlled to be placed in the released state when the vehicle is caused to run, for example, in the Mode1_MG2 or Mode1_MG2_Bron, i.e., the BEV mode in which the second electric motor MG2 is caused to generate the torque. Thus, it is possible to prevent power loss caused by dragging of the third electric motor MG3 during the BEV driving in which the vehicle is caused to run by using the second electric motor MG2 as the power source.

In each of FIGS. 9A and 9B, the forward and backward directions may be reversed from those shown in the drawing.

It is to be understood that the embodiments described above are given for illustrative purpose only, and that the present invention may be embodied with various modifications and improvements which may occur to those skilled in the art.

### NOMENCLATURE OF ELEMENTS

8: vehicle
10: vehicle drive apparatus
12f: front wheel
12r: rear wheel
14f: front drive shaft (first drive shaft)
14r: rear drive shaft (second drive shaft)
16f: front drive unit (first drive unit)
16r: rear drive unit (second drive unit)
18: engine
24: differential mechanism (planetary gear device of double pinion type)
S: sun gear (second rotary element)
C: carrier (first rotary element)
R: ring gear (third rotary element)
26: pair of counter gears (first pair of gears)
28: counter driven shaft
30: pair of final gears (second pair of gears)
32: front differential gear device (differential gear device)
32r: final driven gear (input rotary member)
34: counter drive gear
36: counter driven gear
38: final drive gear
40: power transmission mechanism
80: bearing
100: vehicle
110: vehicle drive apparatus
116f: front drive unit (first drive unit)
116r: rear drive unit (second drive unit)
124: differential mechanism (planetary gear device of double pinion type)
S: sun gear (second rotary element)
C: carrier (third rotary element)
R: ring gear (first rotary element)
200: vehicle
210: vehicle drive apparatus
216f: front drive unit (first drive unit)
216r: rear drive unit (second drive unit)
224: differential mechanism (planetary gear device of single pinion type)
S: sun gear (second rotary element)
C: carrier (third rotary element)
R: ring gear (first rotary element)
300: vehicle
310: vehicle drive apparatus
316f: front drive unit (first drive unit)
316r: rear drive unit (second drive unit)
324: differential mechanism (planetary gear device of single pinion type)
S: sun gear (second rotary element)
C: carrier (first rotary element)
R: ring gear (third rotary element)
330: bearing
410: vehicle drive apparatus
BR: brake (brake mechanism)
CS1: first axis
CS2: second axis
MG1: first electric motor
MG2: second electric motor
MG3: third electric motor
OWC: one-way clutch (brake mechanism)
RE1: first rotary element
RE2: second rotary element
RE3: third rotary element

## Claims

1. A drive apparatus (10;110;210;310;410) for a vehicle (8;100;200;300), the drive apparatus (10;110;210;310;410) comprising:
an engine (18);
a first drive shaft (14f) for driving one of front and rear wheels (12f, 12r) of the vehicle (8;100;200;300); and
a first drive unit (16f; 116f;216f;316f) including: (i) a first electric motor (MG1); (ii) a second electric motor (MG2); (iii) a planetary gear device (24;124;224;324) which has a first rotary element (RE1), a second rotary element (RE2) and a third rotary element (RE3) that are rotatable about a first axis (CS1); (iv) a first pair of gears (26) which consists of a counter drive gear (34) and a counter driven gear (36) meshing with each other; (v) a counter driven shaft (28) which is parallel with the first drive shaft (14f) and the first axis (CS1), and on which the counter driven gear (36) is disposed unrotatably relative to the counter driven shaft (28); and (vi) a second pair of gears (30) which consists of a final drive gear (38) and a final driven gear (32r) meshing with each other, such that the final drive gear (38) is arranged in parallel with the counter driven gear (36) and is disposed on the counter driven shaft (28) unrotatably relative to the counter driven shaft (28),
wherein the engine (18) and the first electric motor (MG1) are connected to the first rotary element (RE1),
wherein the second electric motor (MG2) is connected to the second rotary element (RE2),
wherein the first drive shaft (14f) is connected to the third rotary element (RE3) through the first pair of gears (26) and the second pair of gears (30),
wherein the counter drive gear (34), the planetary gear device (24;124;224;324) and the second electric motor (MG2) are disposed on the first axis (CS1), and are arranged in this order of description as viewed in a direction away from the engine (18), and
wherein the first electric motor (MG1) is disposed on a second axis (CS2) which is parallel with the first axis (CS1), and is connected to the first rotary element (RE1) through a power transmission mechanism (40).

2. The drive apparatus (10;410) according to claim 1,
wherein the planetary gear device (24) is of double pinion type, and includes a sun gear (S), a carrier (C) and a ring gear (R),
wherein the first rotary element (RE1) is one of the carrier (C) and the sun gear (S),
wherein the second rotary element (RE2) is the other of the carrier (C) and the sun gear (S), and
wherein the third rotary element (RE3) is the ring gear (R).

3. The drive apparatus (10;410) according to claim 2,
wherein the first drive unit (16f) further includes a bearing (80) supporting the counter drive gear (34), and
wherein the sun gear (S), the ring gear (R) and the counter drive gear (34) are helical gears having respective helix angles that are set such that a direction of a thrust force applied to the ring gear (R) by a meshing reaction force and a direction of a thrust force applied to the counter drive gear (34) by a meshing reaction force are opposite to each other.

4. The drive apparatus (10;410) according to claim 3,
wherein the helix angle of the ring gear (R) is set such that the thrust force applied to the ring gear (R) by the meshing reaction force in a direction toward the counter drive gear (34).

5. The drive apparatus (110) according to claim 1,
wherein the planetary gear device (124) is of double pinion type, and includes a sun gear (S), a carrier (C) and a ring gear (R),
wherein the first rotary element (RE1) is the ring gear (R),
wherein the second rotary element (RE2) is one of the sun gear (S) and the carrier (C), and
wherein the third rotary element (RE3) is the other of the sun gear (S) and the carrier (C).

6. The drive apparatus (210) according to claim 1,
wherein the planetary gear device (224) is of single pinion type, and includes a sun gear (S), a carrier (C) and a ring gear (R),
wherein the first rotary element (RE1) is one of the ring gear (R) and the sun gear (S),
wherein the second rotary element (RE2) is the other of the ring gear (R) and the sun gear (S), and
wherein the third rotary element (RE3) is the carrier (C).

7. The drive apparatus (310) according to claim 1,
wherein the planetary gear device (324) is of single pinion type, and includes a sun gear (S), a carrier (C) and a ring gear (R),
wherein the first rotary element (RE1) is the carrier (C),
wherein the second rotary element (RE2) is one of the sun gear (S) and the ring gear (R), and
wherein the third rotary element (RE3) is the other of the sun gear (S) and the ring gear (R).

8. The drive apparatus (310) according to claim 7,
wherein the second rotary element (RE2) is the sun gear (S), and the third rotary element (RE3) is the ring gear (R),
wherein the first drive unit (316f) further includes a bearing (330) supporting the counter drive gear (34), and
wherein the sun gear (S), the ring gear (R) and the counter drive gear (34) are helical gears having respective helix angles that are set such that a direction of a thrust force applied to the ring gear (R) by a meshing reaction force and a direction of a thrust force applied to the counter drive gear (34) by a meshing reaction force are opposite to each other.

9. The drive apparatus (10;110;210;310;410) according to claim 1,
wherein the counter driven shaft (28) is located on a lower side of the first axis (CS1) in a vertical direction of the vehicle (8;100;200;300) when the drive apparatus (10;110;210;310;410) is installed in the vehicle (8;100;200;300).

10. The drive apparatus (10;110;210;310;410) according to claim 1,
wherein the final drive gear (38) is located between the counter driven gear (36) and the second electric motor (MG2) in a direction parallel with the counter driven shaft (28).

11. The drive apparatus (10;110;210;310;410) according to claim 1,
wherein the final driven gear (32r) is an input rotary member (32r) of a differential gear device (32) to which the first drive shaft (14f) is connected, and is disposed on an axis of the first drive shaft (14f).

12. The drive apparatus (10;110;210;310;410) according to claim 1,
wherein the first drive unit (16f;116f;216f;316f) further includes a brake mechanism (BR;OWC) configured to stop rotation of the first rotary element (RE1) by being placed in an engaged state.

13. The drive apparatus (10;110;210;310;410) according to any one of claims 1-12, further comprising:
a second drive shaft (14r) for driving the other of the front and rear wheels (12f,12r); and
a second drive unit (16r;116r) including a third electric motor (MG3) connected to the second drive shaft (14r).
